# NEUE EUROPÄISCHE PATENTSCHRIFT

(11) **EP 0 672 016 B2**
(45) Veröffentlichungstag und Bekanntmachung des Hinweises auf die Entscheidung über den Einspruch: **03.03.2004**
(45) Hinweis auf die Patenterteilung: 06.08.1997
(21) Anmeldenummer: 92924663.5
(22) Anmeldetag: 04.12.1992
(51) Int. Cl.: B65H 54/32, B65H 54/553, B65H 55/04, B65H 75/22

(54) **VERFAHREN UND VORRICHTUNG ZUR HERSTELLUNG EINES GEBINDES MIT LANGGESTRECKTEM WICKELGUT**
PROCESS AND DEVICE FOR PRODUCING A PACKAGE OF ELONGATED WINDING MATERIAL
PROCEDE ET DISPOSITIF DE FABRICATION D'UN EMBALLAGE DE MATERIAUX ALLONGES A ENROULER

(43) Veröffentlichungstag der Anmeldung: 20.09.1995
(73) Patentinhaber: MASCHINENFABRIK NIEHOFF GMBH & CO. KG, D-91126 Schwabach (DE)
(72) Erfinder: ECK, Werner, D-91074 Herzogenaurach (DE); HÖRNDLER, Hans-Georg, D-91126 Barthelmesaurach (DE)
(74) Vertreter: Wallinger, Michael, Dr.-Ing.
(86) Internationale Anmeldenummer: PCT/EP1992/002804
(87) Internationale Veröffentlichungsnummer: WO 1994/013569

(56) Entgegenhaltungen:
- EP-A- 0 334 211
- EP-A- 0 411 978
- EP-A- 0 504 503
- DE-A- 3 137 990
- DE-C- 3 543 118
- DE-C- 4 010 005
- DE-U- 7 908 353
- DE-U- 7 935 978
- DE-U- 8 204 141
- DE-U- 8 525 459
- DE-U- 9 109 916
- DE-U- 91 099 161
- GB-A- 2 100 765
- JP-A- 5 930 438
- US-A- 3 552 677
- US-A- 3 822 841
- US-A- 3 827 651
- US-A- 3 940 085
- US-A- 4 462 555

## Beschreibung

Die vorliegende Erfindung betrifft ein Verfahren und eine Vorrichtung zur Herstellung eines Gebindes mit langgestrecktem Wickelgut. Langgestrecktes Wickelgut soll hier vorzugsweise als Wickelgut verstanden werden, welches Metall, insbesondere Kupfer, enthält, wie Draht, blanke oder mit Kunststoff umhüllte Litze und dgl. Die Erfindung soll allerdings auch für Wickelgut anwendbar sein, wie z.B. Glasfaserkabeln, welches sich in ähnlicher Weise wickeln läßt, wie die genannten Beispiele. Zur Vereinfachung wird im folgenden derartiges langgestrecktes Wickelgut generell als Draht bezeichnet.

Draht und insbesondere Kupferdraht wird in der Regel als Gebinde transportiert, welches aus einer Metallspule und dem darauf aufgewickelten Draht besteht. Die Metallspule ist rotationssymmetrisch gestaltet und weist einen zylindrischen oder konischen Wickelkern auf, an dessen beiden Enden jeweils ein Flansch angeordnet ist, wodurch ein Wickelraum zur Aufnahme des Wickelgutes definiert ist. Koaxial zur Rotationsachse der Spule ist eine durchgehende Längsbohrung vorgesehen, die sich an einem oder beiden Enden konisch erweitert. Die Wickelvorrichtungen weisen entsprechend konisch gestaltete Spulenaufnahmeelemente auf, die in die konischen Ausnehmungen der Spule eingreifen und diese während des Wickelvorgangs gleichzeitig haften und zentrieren. Das Bewickeln selbst wird vorgenommen, indem entweder die Spule rotiert, oder indem der Draht bei stillstehender Spule mittels einer Flyereinrichtung, welche um die Spule umläuft, auf die Spule aufgelegt wird. Während bei rotierender Spule das Aufwickeln des Drahtes drallfrei erfolgt, ergibt sich beim Auflegen des Drahtes mit einer Flyereinrichtung eine Eigenverdrehung des Drahtes, ein sogenannter Drall, von 360° pro Windung.

Metallspulen haben den Vorteil einer hohen Festigkeit und einer langen Lebensdauer. Dem steht jedoch als Nachteil entgegen, daß der Gewichtsanteil der Metallspule am fertigen Gebinde relativ hoch ist und daß die Metallspulen vom Drahtverwender wieder zum Drahthersteller zurücktransportiert werden müssen, was beträchtliche zusätzliche Transportkosten verursacht.

Die Fachwelt hat sich deshalb bemüht, Verfahren zur Herstellung von Gebinden zu entwickeln, welche ohne Spule auskommen. Ein derartiges Verfahren ist in der EP-B-0 334 211 beschrieben.

Bei dem dort beschriebenen Verfahren wird ein aus Metall bestehendes Wickelwerkzeug verwendet, welches wie eine übliche Metallspule ausgebildet ist, bei welchem aber der Wickelkern konisch gestaltet und der Flansch an dem Ende des Wickelkerns mit dem kleineren Durchmesser abnehmbar ist. Auf diesen Wickelkern wird eine dünne Papphülse gelegt und der Draht dann in Lagen mit zunehmender Windungszahl aufgelegt, wobei diese Windungszahlen so bemessen sind, daß sich Lagen ergeben, die zum konischen Wickelkern hin geneigt sind. Man spricht hier von doppelkonischem Gebindeaufbau oder von gegenläufig konischer Wicklung. Nach dem Wickelvorgang wird der untere Flansch des Wickelwerkzeuges gelöst und das Wickelwerkzeug aus der Spule entfernt, nachdem das spulenlose Gebinde umreift und mit einer Kunststoffumhüllung versehen ist.

Dieses Gebinde hat den Vorteil eines günstigen Transportvolumens und -gewichtes und einer guten Festigkeit bei optimalen Ablaufbedingungen des Drahtes beim Verarbeiter. Die zur Verpackung verwendeten Materialien brauchen nicht zum Drahthersteller zurücktransportiert zu werden, wodurch diese Transportkosten vollständig entfallen. Diese Gebindeform hat sich deshalb bei vielen Drahtverwendern durchgesetzt.

Das bekannte spulenlose Gebinde hat jedoch einen Nachteil, der bei kleinen und mittleren Verwendern nur wenig, bei Großverwendern, wie der Automobilindustrie, aber doch deutlich in Erscheinung tritt. Die Automobilindustrie benötigt große Mengen von mit Isoliermaterial umhüllter Kupferlitze, die heute in vielen Fällen als derartige spulenlose Gebinde hergestellt und geliefert werden. Da die Gebinde der heutigen Fertigungsphilosophie folgend, unmittelbarvom Kabelhersteller an die Verbrauchsstellen geliefert werden, fällt dort eine beträchtliche Menge von Verpackungsmaterial, bestehend aus Papphülle, Bändern und Kunststoffumhüllung an, die gesammelt und entsorgt werden muß.

Außerdem erfordert der Umgang mit dem spulenlosen Gebinde eine gewisse Sorgfalt beim Transport, da die verwendete Pappe feuchtigkeitsempfindlich ist und das Gebinde im rauhen Staplerbetrieb leicht beschädigt werden kann.

Ein Verfahren gemäß dem Oberbegriff des Anspruches 1 ist mit der EP-A-0 504 503 bekannt geworden. Bei diesem bekannten Verfahren wird das Kabel auf einen konischen Wickelkern aufgewickelt, an dessen Ende mit dem größeren Durchmesser ein fester Flansch angeordnet ist. Der Wickelkern ist während der Bewicklung derart in einer Wickelvorrichtung angeordnet, daß die Rotationsachse senkrecht ist und der feste Flansch nach unten weist. Während des Wickelvorgangs wird eine Platte, die Teil der Wickelvorrichtung ist, auf das obere Ende des Wikkelkerns mit dem kleineren Durchmesser gepreßt. Nach der Fertigstellung wird der Wickelkern aus der Vorrichtung entnommen und mit einer Folie umhüllt. Der Wickelkern weist an dem Ende mit kleinerem Durchmesser ein mechanisches Anschlußmittel für eine dort später anzubringende, den Wickelkern abschließende, aber nicht zum Wickelkern gehörige Verschluß- bzw. Hubplatte auf.

Die GB-A-2 100 765 beschreibt eine Wickelvorrichtung, die dafür vorgesehen ist, die manuelle Handhabung, insbesondere von schweren Spulen und von Spulen, die keine zentrale Öffnung haben, zu vereinfachen. Die dazu verwendeten Spulen weisen einen zylindrischen Spulenkern und konische Flansche auf, wobei Abstützeinrichtungen der Wickelvorrichtungen die konischen Flansche auf der dem Spulenkern abgewandten Seite abstützen.

Es ist die Aufgabe der vorliegenden Erfindung, ein Verfahren und eine Vorrichtung zur Herstellung eines Gebindes zu schaffen, welches einerseits günstige Transporteigenschaften aufweist, welches andererseits aber mit einer geringen Menge von Verpackungsmaterial auskommt.

Diese Aufgabe wird erfindungsgemäß durch ein Verfahren gemäß Anspruch 1 gelöst.

Die erfindungsgemäße Vorrichtung ist Gegenstand des Anspruches 6.

Durch das erfindungsgemäße Verfahren ist es möglich, ein Gebinde mit günstigen Transporteigenschaften herzustellen, bei welchem praktisch kein Verpackungsmaterial anfällt.

Dieses wird erreicht, indem eine teilbare Wickelspule verwendet wird, die vorzugsweise aus Kunststoff besteht. Da die Wickelspule teilbar ausgeführt ist, kann die Wickelspule nach dem Entnehmen des Wickelgutes zerlegt werden. Dadurch wird das Transportvolumen, welches beim Rücktransport der Leerspulen vom Drahtverwender zum Drahthersteller anfällt, wesentlich vermindert.

Die Flansche der Wickelspule werden während des Wickelvorganges von außen abgestützt. Dies hat zum einen den Vorteil, daß die Flansche während des Wikkelvorganges keinen axial gerichteten Wickeldruck aufnehmen müssen und deshalb mit geringerem Materialaufwand und damit auch mit geringem Gewicht gefertigt werden können. Zum anderen ergibt sich der wesentliche Vorteil, daß durch diese Gestaltung das Auftreten von elastischen Rückstellkräften insbesondere am unteren Spulenflansch wesentlich verringert wird. Wird eine Kunststoffspule mit üblichen konischen Einspanneinrichtungen eingespannt, verformen sich die Flansche während des Wickelns infolge des axialen Wickeldruckes vom Wickelkern gesehen aus nach außen. Dadurch ergibt sich eine Rückstellkraft der Flansche, die auf die fertiggestellte Wicklung drückt und beim späteren Abwickeln des Drahtes zu Ablaufproblemen führen kann. Wird die Verformung der Flansche während des Wickelns jedoch verhindert, wie dies durch die Erfindung vorgeschlagen wird, entsteht keine elastische Rückstellkraft und keine Belastung des Gebindes und eine Umreifung des fertigen Gebindes kann entfallen. Somit wird weder eine Pappeeinlage noch Material zum Umreifen benötigt und muß auch nicht entsorgt werden.

Für Großverwender von Kupferdraht bzw. von mit einer Isolierung versehenen Kuperlitzen, z.B. also für die Automobilindustrie, bringt das durch die Erfindung zur Verfügung gestellte Gebinde wesentliche Vorteile.

Da die vorzugsweise verwendete Kunststoffspule ein geringes Gewicht hat, ist das Gesamtgewicht des Gebindes zwar höher als das Gewicht eines vergleichbaren spulenlosen Gebindes, jedoch deutlich geringer als das Gesamtgewicht eines Gebindes, bei welchem eine herkömmliche Metallspule verwendet wird.

Da die verwendeten Spulen teilbar sind, können die Spulen unmittelbar nach ihrer Entleerung geteilt und platzsparend gestapelt werden. Das Automobilwerk benötigt deshalb keine zusätzlichen Lagerflächen, um die leeren Spulen oder andere Verpackungsbehälter (z.B. Fässer) zu lagern.

Die leeren Spulen können zum Kabelhersteller zurückgebracht werden, sobald eine neue Ladung mit befüllten Kunststoffspulen eintrifft. Aufgrund des geringen Ladevolumen und des geringen Transportgewichtes ist sowohl die Verladung der Leerspulen als auch deren Transport sehr einfach.

Beim erfindungsgemäßen Verfahren kann das Wikkeln des Drahtes erfolgen, indem die Spule um ihre Längsachse rotiert. Dies hat den Vorteil, daß der Draht ohne Drall aufgelegt wird. Stattdessen ist es jedoch auch möglich, die Spule feststehen zu lassen und die Verlegeeinrichtung als sogenannter Flyer um die Spule rotieren zu lassen.

Bei einer zu bevorzugenden Ausführungsform des erfindungsgemäßen Verfahrens wird auf die Spule ein Wickelbild aufgebracht, wie es aus der EP-B-0 334 211 bekannt ist. Dies bedeutet, daß die Verlegeeinrichtung durch eine Steuereinrichtung so gesteuert wird, daß die Verlegung am Wickelkern mit dem geringeren Durchmesser beginnt und daß dann eine erste Wickellage aufgebracht wird, die hinsichtlich der Windungsanzahl und der Windungssteigung so bemessen ist, daß die Wicklung nur einen kleineren axialen Bereich des Wikkelkerns abdeckt und nicht bis zum Ende des Wickelkernes mit dem größeren Durchmesser reicht. Die Wikkellage wird dann zurückgewickelt und es wird eine neue Wickellage mit einer vergrößerten Anzahl von Windungen aufgebracht. Die aufeinanderfolgenden Wickellagen werden so gesteuert, daß die Wickellagen im Bereich des Wickelkernes mit kleinerem Durchmesser den größten Abstand von der Rotationsachse der Spule aufweisen. Dies bedeutet, daß die Wickellagen, in einem zentralen Längsschnitt der Spule gesehen, im spitzen Winkel zum Mantel des Wickelkerns geneigt sind. Dadurch entsteht ein doppelkonischer oder doppelkegeliger Wicklungsaufbau, der dem Gebinde zu einer optimalen Festigkeit verhilft.

Wie dies in der genannten EP-B-0 334 211 beschrieben ist, kann die Bewicklung der Spule, sobald die erste Wickellage den Flansch an der Seite des Wickelkerns mit größerem Durchmesser erreicht, mit gleicher Anzahl von Windungen oder mit einer abnehmenden Anzahl von Windungen erfolgen, so daß letztlich ein Wicklungsaufbau entsteht, bei dem die äußeren Wickellagen parallel zur Längsachse der Spule sind.

Die erfindungsgemäße Vorrichtung zur Durchführung des Verfahrens weist zwei Spulenaufnahmeeinrichtungen auf, die die Wickelspule während des Wikkelvorgangs aufnehmen. Jede Spuleaufnahmeeinrichtung weist eine Zentriereinrichtung auf, um die Spule zu zentrieren, sowie eine Stützeinrichtung, welche zumindest einen äußeren Umfangsbereich des jeweiligen Flansches der Spule abstützt. Diese Stützeinrichtung kann im wesentlichen als Stützplatte ausgebildet sein, welche den Flansch flächig abstützt. Statt einer flächigen Abstützung ist auch eine punktförmige Abstützung möglich, bei welcher eine Anzahl von Stützflächen dieser Stützeinrichtung im Kontakt mit dem Flansch einer aufzunehmenden Wickelspule stehen.

Die Wickelvorrichtung wird vorzugsweise durch eine Steuerung gesteuert, um ein bestimmtes Wickelbild erzeugen zu können.

Durch die Erfindung wird weiterhin gemäß Anspruch 10 eine Wickelspule zur Verfügung gestellt, die sich besonders zur Verwendung mit dem erfindungsgemäßen Verfahren eignet.

Die erfindungsgemäße Wickelspule besteht aus Kunststoff und weist einen konischen Wickelkern auf, dessen Wandstärke im wesentlichen konstant ist, so daß der Konizitätswinkel des Außenmantels des Wikkelkerns und des Innenmantels im wesentlichen gleich sind. Zumindest der Flansch der Wickelspule, weicher an dem Wickelkern mit dem kleineren Durchmesser angeordnet ist, ist lösbar mit diesem verbunden.

Durch diese Gestaltung ist es möglich, die vom lösbaren Flansch getrennten Wickelkerne ineinander einzuschieben.

Die Wickelspule kann somit im unbewickelten Zustand transportiert werden, indem Wickelkern und Flansch getrennt und Wickelkeme und Spulenflansche platzsparend gestapelt werden.

Dadurch läßt sich, wie später noch gezeigt wird, das Ladevolumen der Wickelspulen erheblich vermindern.

Als Material für die Spule kommen insbesondere Kunststoffe wie Polyurethan, Polypropylen, Polystyrol, Acrylnitril-Butadien-Styrol (ABS) in Frage. Der Kunststoff kann, wenn höhere Festigkeitsanforderungen zu erfüllen sind, mit geeigneten Mitteln, beispielsweise mit Glasfasern, verstärkt sein.

Die Verbindung zwischen dem Wickelkern und dem abnehmbaren Flansch geschieht vorzugszweise formschlüssig, und zwar besonders bevorzugt durch Rastelemente, die am Wickelkern und am Spulenflansch angeordnet sind und die bei der Montage in Eingriff miteinander gebracht werden.

Bei einer bevorzugten Ausführungsform der Wikkelspule ist der zweite Flansch an dem Ende mit dem größeren Durchmesser des Wickelkems nicht abnehmbar. Der zweite Flansch ist dann vorzugsweise einstükkig mit dem Wickelkern ausgebildet und kann gemeinsam mit diesem beispielsweise durch ein Spritzgußverfahren hergestellt werden.

Um das Stapeln von vollen Spulen zu erleichtern, sind an den Außenseiten beider Flansche, d.h. also auf der vom Wickelkern abgewandten Seite, vorzugsweise Vorsprünge und Einkerbungen vorgesehen, die ineinander eingreifen, wenn bewickelte Spulen aufeinandergestapelt werden. Dadurch wird der Transport der bewickelten Spulen weiter vereinfacht.

Es wird darauf hingewiesen, daß die Verwendung dieser Spulen in Verbindung mit dem durch die Erfindung vorgeschlagenen Verfahren besonders vorteilhaft ist, daß die Spulen aber auch mit anderen Wickelverfahren und mit anderen Wickelvorrichtungen verwendet werden können.

Weitere Vorteile, Merkmale und Anwendungsmöglichkeiten der vorliegenden Erfindung ergeben sich aus der nachfolgenden Beschreibung von Ausführungsbeispielen in Zusammenhang mit der Zeichnung. Darin zeigen in schematisierter Weise:
- Fig. 1: eine Seitenansicht eines Ausführungsbeispieles der erfindungsgemäßen Wickelvorrichtung, bei welchem die verwendete Wikkelspule zur Hälfte in einer Längsschnittdarstellung gezeichnet ist;
- Fig. 2: einen Längsschnitt durch ein erstes Ausführungsbeispiel einer Wickelspule gemäß der Erfindung im montierten Zustand;
- Fig. 3: mehrere Wickelkeme des Ausführungsbeispiels gemäß Fig. 2 im aufeinandergestapelten Zustand;
- Fig. 4: mehrere abnehmbare Flansche des Ausführungsbeispiels gemäß Fig. 2 im gestapelten Zustand;
- Fig. 5: zwei bewickelte Spulen des Ausführungsbeispieis gemäß Fig. 2 im gestapelten Zustand;
- Fig. 6: die Wickelspule gemäß Fig. 2 im bewickelten Zustand mit einer Abzugseinrichtung;
- Fig. 7: eine Hilfseinrichtung zur Demontage des abnehmbaren Flansches beim Ausführungsbeispiel gemäß der Fig. 2;
- Fig. 8: eine Schnittdarstellung eines zweiten Ausführungsbeispiels einer Wickelspule gemäß der Erfindung, entlang der Linie II-II in Fig. 10;
- Fig. 9: eine vergrößerte Teildarstellung der Wikkelspule gemäß Fig. 8;
- Fig. 10: eine Unteransicht des kleinen Flansches der Wickelspule gemäß Fig. 8, wobei Unteransicht von der dem Wickelkern abgewandten Seite des Flansches aus gesehen, bedeutet;
- Fig. 11: eine Teilansicht des kleineren Flansches gemäß Fig. 10, von der oberen Seite aus gesehen, wobei der Wickelkern nicht mit eingezeichnet ist;
- Fig. 12: eine Schnittansicht durch den Wickelkern entlang der Linie I-I in Fig. 8, wobei der untere Flansch hier weggelassen ist;
- Fig. 13: eine Darstellung, ähnlich der Fig. 3 mit einer Anzahl von lösbaren Flanschen der Wickelspule gemäß Fig. 8, im aufeinandergestapelten Zustand;
- Fig. 14: eine Darstellung, ähnlich der Darstellung in Fig. 4, in welcher gezeigt ist, wie bewickelte Wickelspulen des Ausführungsbeispiels gemäß Fig. 8 aufeinandergestapelt werden;
- Fig. 15: die Montage des lösbaren Flansches bei einer Wickelspule des Ausführungsbeispieles gemäß Fig. 8; und
- Fig. 16: die Demontage des lösbaren Flansches bei einer Wickelspule des Ausführungsbeispiels gemäß Fig. 8.

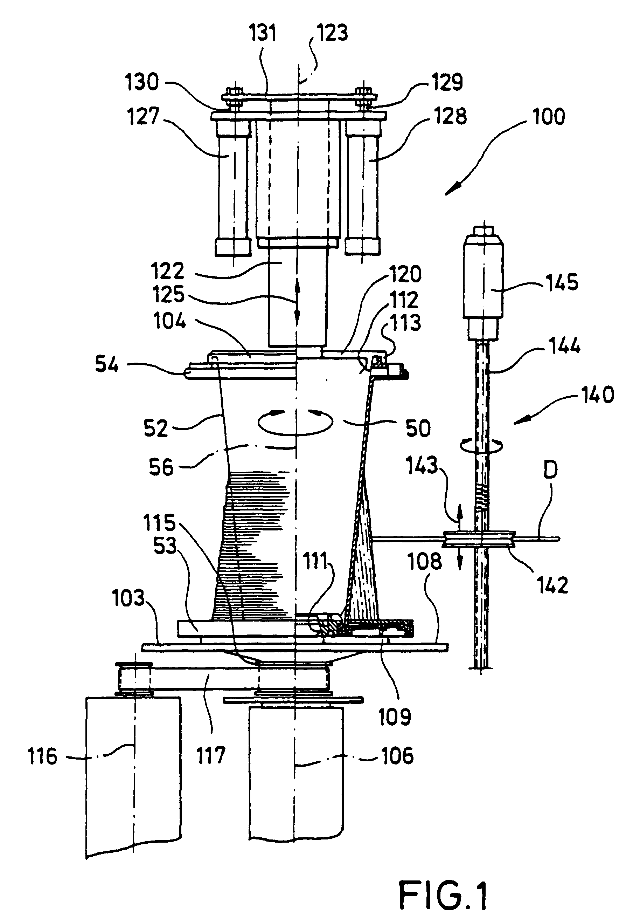

Ein Ausführungsbeispiel der Wickelvorrichtung gemäß der vorliegenden Erfindung wird nachfolgend in bezug auf die Fig. 1 beschrieben.

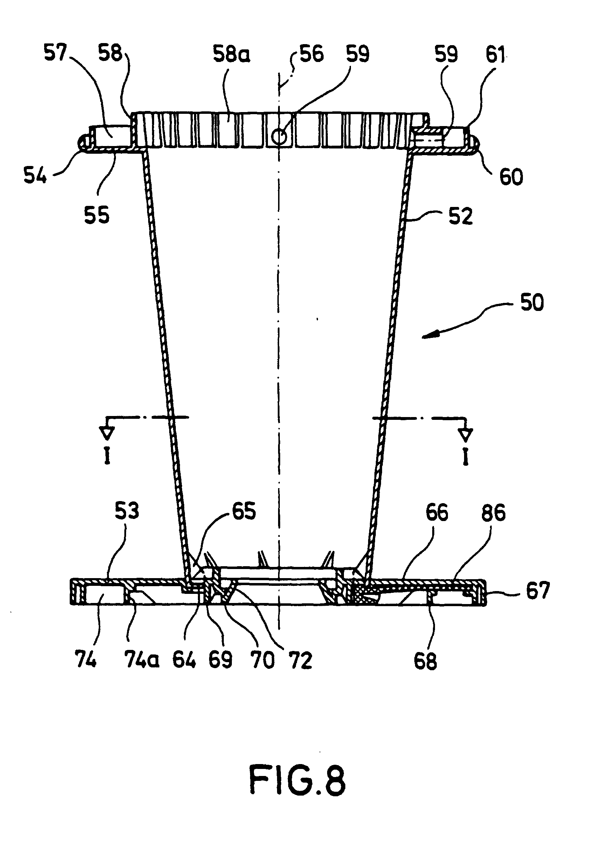

Die insgesamt mit 100 bezeichnete Vorrichtung weist eine erste Spulenaufnahmeeinrichtung 103 und eine zweite Spulenaufnahmeeinrichtung 104 auf. Die Wickelspule 50, die in bezug auf die Fig. 8, noch im einzelnen beschrieben wird, weist einen konischen Wickelkern 52 und einen ersten Flansch 53 sowie einen zweiten Flansch 54 auf. Der erste Flansch 53 ist an dem Ende des Wickelkernes mit kleinerem Durchmesser angeordnet, der zweite Flansch 54 an dem Ende des Wickelkerns mit größeren Durchmesser. Die Wickelspule ist im wesentlichen rotationssymmetrisch zu der in ihrer Längsrichtung verlaufenden Achse 56.

Die Wickelvorrichtung ist, wie dargestellt, vorzugsweise so gestaltet, daß die Spulenlängsachse 56 senkrecht steht, und der erste Flansch 53 unten und der zweite Flansch 54 oben angeordnet sind.

Die Spulenaufnahme 103 ist ebenfalls im wesentlichen rotationssymmetrisch gestaltet und ist um eine Achse 106 drehbar. Die Spulenaufnahmeeinrichtung weist eine kreisförmige Grundplatte 108 auf, auf der eine Stützplatte 109 mit kleinerem Durchmesser angeordnet ist. Auf der Stützplatte 109 befindet sich ein Konus 111, der in eine entsprechend gestaltete Bohrung 72 des Flansches 53 der Wickelspule 50 eingreift. Durch diesen Konus wird die Wickelspule in bezug auf die Spulenaufnahmeeinrichtung 103 zentriert.

Konzentrisch zur Spulenaufnahmeeinrichtung 103 ist eine Riemenscheibe 115 angeordnet, welche über einen Treibriemen 117 von einer (nicht näher erläuterten) Antriebseinrichtung 116 angetrieben wird.

Die obere Spulenaufnahmeeinrichtung 104 weist eine Platte 120 auf, welche an einem Stempel 122 befestigt ist. Die Platte ist drehbar um eine Rotationsachse 123 gelagert, welche mit der Achse 56 der Wickelspule und der Achse 106 der unteren Spulenaufnahme zusammenfällt. Der Stempel ist, wie durch den Pfeil 125 angedeutet ist, heb- und senkbar, wozu, nicht näher erläuterte Kolben-Zylindereinheiten 127 und 128 verwendet werden. Die Kolben 129, 130 der Kolben-Zylindereinheiten sind über ein Joch 131 mit dem Stempel 122 verbunden.

An der Platte 120 ist ein in Richtung auf die Wikkelspule weisender Ring 112 angeformt, dessen Außenwand zur Platte 120 geneigt ist, wobei der Winkel dem Konizitätswinkel der Wickelspule 50 entspricht. Ein zweiter Ring 113 ist am äußeren Umfang der Platte 120 angeformt und weist ebenfalls nach unten auf die Wikkelspule zu.

Die Wickelvorrichtung weist weiterhin eine Verlegeeinrichtung 140 auf, die mit einer Verlegerolle 142 versehen ist, über welche der Draht bzw. das Kabel D zur Wickelspule geführt wird. Die Verlegerolle 142 ist, wie durch den Doppelpfeil 143 angedeutet ist, in einer Richtung parallel zur Wickelspulenachse 56 heb- und senkbar. Die Verlegeeinrichtung weist dazu eine sich parallel zur Längsachse der Wickelspule erstreckende Gewindespindel 144 auf, welche über eine Antriebseinrichtung 145 in beiden Richtungen drehbar ist. Je nach Drehrichtung der Verlegeeinrichtung wird dabei die Verlegerolle angehoben, d.h. in Richtung auf die Antriebseinrichtung 145 bewegt, bzw. wieder abgesenkt.

Die Funktion der Wickelvorrichtung wird durch eine (nicht dargestellte) Steuereinrichtung gesteuert. Die Steuereinrichtung nimmt Signale von Sensoren auf, welche die Winkelgeschwindigkeit der Spule angeben, und Signale, welche die jeweilige Position der Verlegerolle 142 anzeigen.

Ausgehend von diesen Signalen werden die Antriebseinrichtung 116 und die Antriebseinrichtung 145 so gesteuert, daß sich beim Wickelvorgang auf der Spule 50 das gewünschte Wickelbild ergibt.

Nachfolgend wird nun die Funktion dieser Vorrichtung beschrieben:

Durch eine Hubbewegung der Kolben-Zylindereinheiten 127 und 128 wird der Stempel 122 und damit die Spulenaufnahmeeinrichtung 104 angehoben. Eine Wikkelspule wird manuell oder durch eine automatisch arbeitende Einrichtung auf die Spulenaufnahme 103 aufgesetzt, wobei der Konus 111 der Spulenaufnahme in die Öffnung 72 der Wickelspule eingreift, und diese zentriert.

Anschließend wird der Stempel 122 mit der Spulenaufnahme 104 abgesenkt, bis diese am oberen Ende der Spule aufliegt. Dabei zentriert der konische Ring 112 das obere Ende des Wickelkerns mit dem größeren Durchmesser und der Ring 113 der Spulenaufnahme stützt den Flansch 54 der Spule ab.

Das Drahtende wird dann am unteren Flansch 53 festgelegt, z.B. durch eine automatisch arbeitende Einrichtung und die Wickelspule in Drehung versetzt, um den Draht bzw. das Kabel aufzuspulen. Dabei geschieht die Steuerung der Antriebseinrichtung 116 und der Antriebseinrichtung 145 vorzugsweise so, daß sich ein Wickelbild ergibt, wie dies in der EP-B-0 334 211, siehe dort insbesondere die Fig. 1, 2 und 4 sowie die zugehörige Beschreibung, ergibt.

Während des Wickelvorganges wird der untere Flansch 53 durch die Stützplatte 109 und der obere Flansch 54 durch die Platte 120 der Spulenaufnahme 104 bzw. durch den Ring 113 abgestützt. Dadurch können sich die Flansche durch den Wickeldruck und das Eigengewicht des Wickelgutes nicht verformen. Durch die Gestaltung werden aber nicht nur die axialen Kräfte, sondern auch die radialen, in der Wickelspule wirkenden Kräfte aufgenommen. Im Bereich der unteren Spulenaufnahme 103 geschieht dies durch den Konus 111, der den unteren Flansch 53 großflächig abstützt. Da der Flansch, wie sich aus der Beschreibung noch ergibt, mit entsprechenden Verstärkungsrippen versehen werden kann, reicht diese Abstützung aus, um eine unzulässige Verformung des Flansches trotz dessen geringen Eigengewichtes zu vermeiden.

Das obere Ende des Wickelkerns und der Flansch 54 werden durch den Ring 112 und den Ring 113, der sich an einem entsprechenden Vorsprung des Flansches 54 abstützt, zangenartig gehalten. Dadurch werden sowohl die radial nach innen als auch die radial nach außen wirkenden Kräfte unmittelbar von der Platte 120 aufgenommen und damit eine Verformung des Wikkelkernes und des Flansches in diesem Bereich zuverlässig verhindert.

Sobald die Spule vollständig bewickelt ist, wird der Draht, vorzugsweise durch eine automatische Fangund Schneideeinrichtung gefangen und abgeschnitten und das spulenseitige Ende ebenfalls vorzugsweise automatisch an der Spule festgelegt. Anschließend wird die Spule entnommen und kann ohne weitere Verpakkungsmaßnahmen gestapelt und transportiert werden.

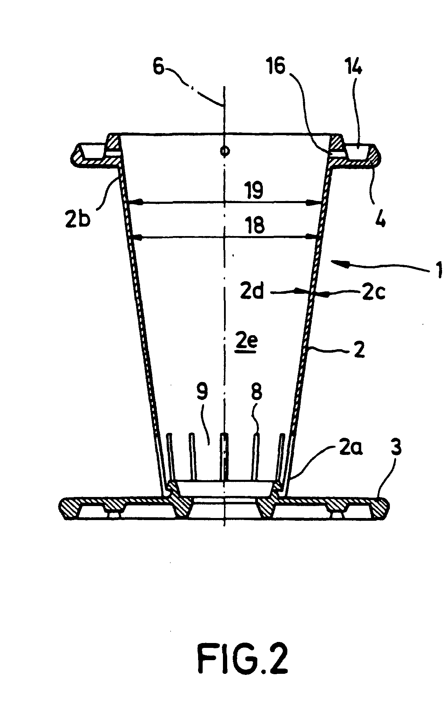

Ein erstes Ausführungsbeispiel der Wickelspule, wie sie in der erfindungsgemäßen Vorrichtung verwendet werden kann, wird nun in bezug auf die Fig. 2 bis 7 beschrieben.

Die in Fig. 2 dargestellte Spule 1 besteht aus einem konischen Wickelkern 2, einem ersten Flansch 3 und einem zweiten Flansch 4. Der erste Flansch 3 ist abnehmbar und an dem Ende 2a des Wickelkemes angeordnet, dessen Durchmesser kleiner ist.

Der zweite Flansch 4 ist am Ende 2b des Wickelkerns mit dem größeren Durchmesser angeordnet und ist einstückig mit dem Wickelkern ausgebildet.

Die Spule ist insgesamt im wesentlichen rotationssymmetrisch zu der in ihrer Längsrichtung verlaufenden Achse 6.

Am Ende 2a des Wickelkerns 2 mit dem kleineren Durchmesser sind eine Anzahl von Einschnitten 8 im Wickelkern vorgesehen, die jeweils den gleichen Abstand zueinander aufweisen. Durch diese Einschnitte werden eine Vielzahl von Laschen 9 gebildet, die gegen eine elastische Rückstellkraft nach außen, d.h. von der Rotationsachse 6 hinweggedrückt werden können.

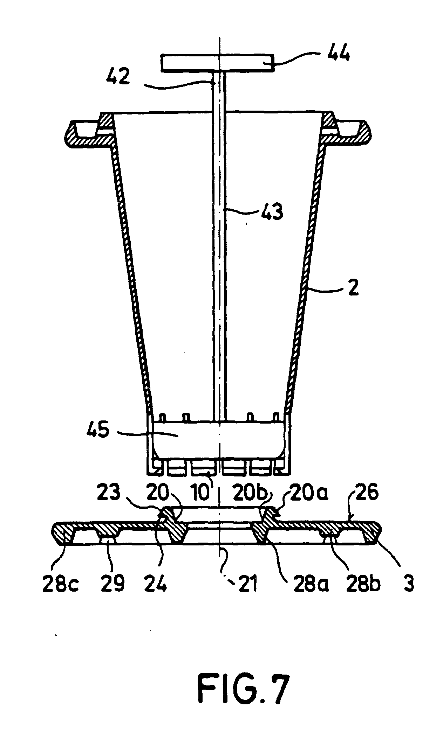

Jede Lasche 9 weist in ihrem Randbereich, der die Endkante des Wickelkerns mit dem kleineren Durchmesser bildet, eine Rastzunge 10 auf (vgl. auch Fig. 7), die im wesentlichen senkrecht zur Rotationsachse 6 des Wickelkerns verläuft.

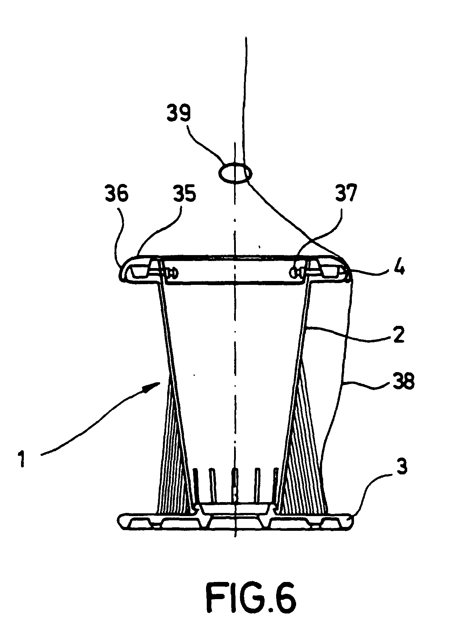

Am zweiten Flanschende, dem festen Flansch 4, sind Verstärkungsrippen 14 vorgesehen, die die Festigkeit des Flansches erhöhen. Weiterhin sind eine Anzahl von Bohrungen 16 im Flansch angeordnet, die senkrecht zur Rotationsachse 6 verlaufen. Die Bohrungen können für den Einsatz von Hebezeugen oder aber auch für die Befestigung von Ablaufhilfen (vgl. Fig. 6) verwendet werden.

Wie in Fig. 2 zu erkennen ist, ist der Konizitätswinkel 18 des Zylinderaußenmantels 2c gleich dem Konizitätswinkel 19 des Zylinderinnenmantels 2d oder, anders ausgedrückt, der Mantel des Wickelkems weist zwischen den beiden Flanschen eine konstante Wandstärke auf.

Da das Ende mit dem größeren Durchmesser 2b des Wickelkernes geöffnet ist, entsteht dadurch ein konischer Hohlraum 2e, der das Stapeln des Wickelkerns erlaubt.

Der erste, abnehmbare Flansch 3 weist, wie in Fig. 2 und Fig. 7 ersichtlich, einen kegelförmigen Ansatz 20 auf, der rotationssymmetrisch zu einer Achse 21 ist, die, im montierten Zustand, mit der Rotationsachse 6 des Wickelkerns zusammenfällt.

Der kegelförmige Ansatz 20 weist, nach außen gerichtete Rastvorsprünge 23 auf, deren Rastflächen 24 im wesentlichen senkrecht zur Zylinderachse 21 verlaufen, wobei dieser kegelförmige Ansatz 20 zur Montage dem Wickelkern 2 zugewandt wird.

Der kegelförmige Ansatz 20 ist einstückig mit der rotationssymmetrischen Flanschplatte 26 verbunden. An ihrer, dem Wickelkern 2 abgewandten Seite sind drei konzentrische Rippen angeordnet, die einen inneren Rippenring 28a, einen mittleren Rippenring 28b und einen äußeren Rippenring 28c bilden.

Im mittleren Rippenring 28b sind Vertiefungen 29 vorgesehen.

Die Funktion dieser Spule ist wie folgt:
Wickelkern 2 und Flansch 3 werden separat voneinander gefertigt, vorzugsweise durch Spritzgießen aus einem geeigneten Kunststoffmaterial.

Zur Montage der Spule wird der Flansch 3 auf eine ebene Fläche aufgelegt und das Ende 2a des Wickelkerns auf den kegelförmigen Ansatz 20 gedrückt. Da die obere Fläche 20a des kegelförmigen Ansatzes etwas konisch geformt ist, werden die Laschen 9 mit den Rastzungen 10 nach außen gedrückt, wenn ein Druck auf den Wickelkern in senkrechter Richtung auf den Flansch 3 hin ausgeübt wird. Sobald der Wickelkern 2 weit genug nach unten geschoben wurde, federn die Laschen 9 mit den Rastzungen 10 elastisch zurück und die Rastzungen 10 liegen an den Rastflächen 24 an. Damit ist die Montage beendet und es kann mit der Bewicklung der Spule begonnen werden.

Sobald die ersten Drahtwindungen um den Spulenkern gelegt worden sind (vgl. Fig. 6), sind die Rastzungen 10 und die Laschen 9 an einer Bewegung nach außen gehindert. Damit wird eine feste formschlüssige Verbindung zwischen Wickelkern 2 und dem abnehmbaren Flansch 3 erreicht. Die Festigkeit der Verbindung ist also weitaus höher als es den elastischen Haltekräften der Laschen 9 entspricht. Dies bedeutet, daß die Dicke des Wickelkernmantels und die geometrische Anordnung der Rastzungen so gewählt werden können, daß eine Montage und eine Demontage von Hand möglich ist. Zusätzliche Sicherungsmaßnahmen, wie beispielsweise eine Schraubsicherung und dgl., sind nicht erforderlich.

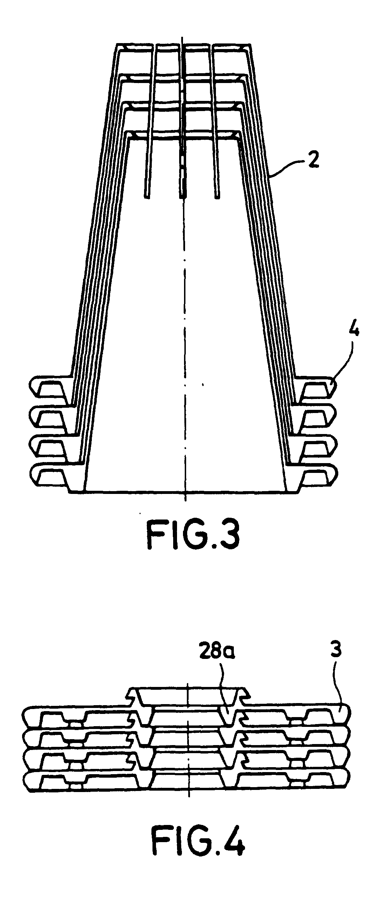

In den Fig. 3 und 4 ist gezeigt, wie vorteilhaft die Transportmöglichkeiten der erfindungsgemäßen Wikkelspule sind. Zum Transport werden Wickelkern 2 und abnehmbarer Flansch 3 voneinander getrennt und die Wickelkerne so aufgestellt, daß das Ende 2b des Wikkelkerns mit dem größeren Durchmesser nach unten weist, also beispielsweise auf einer Transportpalette aufsteht. Auf den Wickelkern können dann eine große Zahl entsprechender Wickelkerne gestapelt werden, wobei die Wickelkerne jeweils mit dem oberen Ende des Flansches 4 aufeinander aufstehen. Dadurch bildet sich zwischen den ineinandergestapelten Wickelkemen ein kleiner Luftspalt, der die Adhäsionskräfte zwischen den gestapelten Wickelkernen minimiert, so daß die Wickelkerne auf einfache Weise voneinander getrennt werden können.

In der Fig. 4 ist gezeigt, wie die abnehmbaren Flansche 3 gestapelt werden.

Wie in der Fig. 4 zu erkennen ist, ist der innere Rippenring 28a so gestaltet, daß er exakt in die konische Öffnung 20b des kegelförmigen Ansatzes 20 des Flansches paßt. Dadurch können die Flansche nicht nur platzsparend aufeinandergestapelt werden, es wird auch ein Verrutschen der Flansche gegeneinander verhindert.

Die Vorteile der Gestaltung der erfindungsgemäßen Spule für den Transport sollen an einem Beispiel erläutert werden: Um 100 nicht zerlegbare Spulen üblicher Abmessung mit einem Durchmesser von 400 mm zu transportieren, werden 17 Paletten benötigt, da jeweils nur 6 Spulen auf eine Palette passen. Die insgesamt erforderliche Ladefläche ist 16,32 m², was bei einer Ladehöhe von 610 mm ein Ladevolumen von 9,95 m³ bedeutet.

Werden dagegen 100 zerlegte Spulen gemäß der Erfindung transportiert, so können auf einer Palette vier Stapel mit je 25 Wickelkernen und zwei Stapel mit jeweils 50 abnehmbaren Flanschen angeordnet werden. Die gesamte Ladefläche entspricht also der Fläche einer Palette von 0,96 m², was bei einer Ladehöhe von 1275 mm ein Ladevolumen von 1,224 m³ bedeutet.

Die Verwendung der erfindungsgemäßen Spulen bedeutet also eine Verminderung der Ladefläche auf 1/17 und eine Verminderung des Ladevolumens auf 1/8. Zudem wird auch das Beund Entladen wesentlich vereinfacht, da zum Laden dieser 100 Spulen nur noch eine einzelne Palette bewegt werden muß.

Die erfindungsgemäße Gestaltung ist aber auch von Vorteil, wenn bewickelte Spulen transportiert werden müssen.

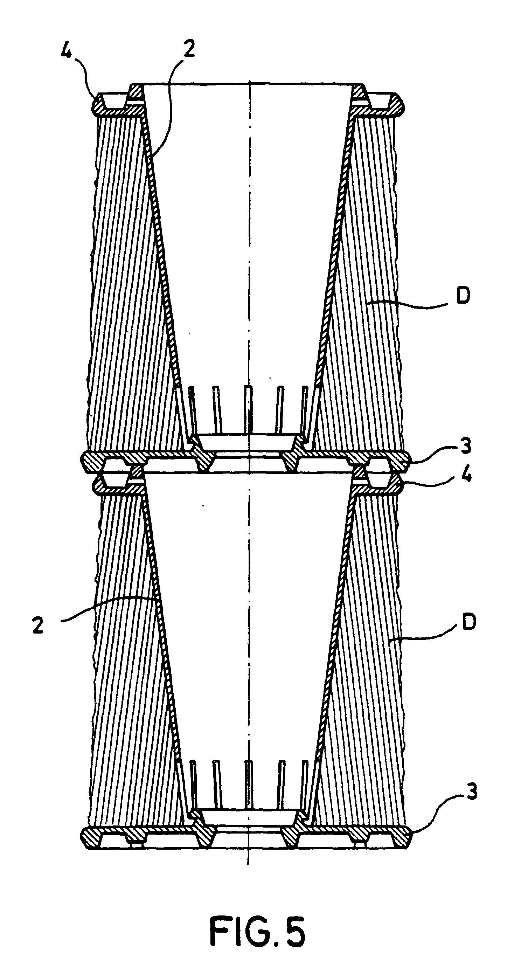

Wie in Fig. 5 dargestellt ist, können die bewickelten Spulen direkt aufeinandergestellt werden. Dabei stützen sich der äußere Verstärkungsring 28c und der mittlere Verstärkungsring 28b des ersten, abnehmbaren Flansches 3 unmittelbar auf dem zweiten, festen Flansch der Spule ab. Dabei greift der Flansch 4 derart in die Vertiefungen 29 ein, daß die Wickelspulen gegeneinander zentriert werden und außerdem ein Verrutschen der Spulen gegeneinander nicht möglich ist. Durch die erfindungsgemäße Gestaltung können auch nur teilweise befüllte Spulen transportiert und gelagert werden.

Fig. 6 zeigt, wie die Spule unmittelbar als Ablaufvorrichtung eingesetzt werden kann.

Dazu wird die Spule, wie in den meisten Fällen beim Abwikkeln und Aufwickeln bevorzugt, senkrecht aufgestellt, so daß der abnehmbare Flansch 3 auf einer ebenen Aufstandsfläche aufsteht. Ein metallischer Ablaufring 35, der eine gewölbte metallische Oberfläche 36 aufweist, wird auf den oberen Flansch 4, bzw. teilweise in den konischen Hohlraum des Wickelkernes 2 auf- bzw. eingelegt und mit Bolzen 37 in den Bohrungen 16 gesichert.

Wie in Fig. 6 zu erkennen ist, wird der Draht 38, der auf die Spule 1 gewickelt ist, über diesen Ablaufring 35 und durch eine Öse 39 geführt. Auf diese Art und Weise kann der Draht von der Spule abgezogen werden, ohne daß weitere Hilfsmittel erforderlich wären.

Es ist auch möglich, den Draht ohne Hilfsmittel, d. h. alsc ohne Ablaufring und dergleichen unmittelbar von der Spule abzuziehen.

In Fig. 7 ist dargestellt, wie Wickelkern 2 und abnehmbarer Flansch 3 voneinander getrennt werden können.

Dazu wird als Hilfswerkzeug ein Stempel 42 verwendet, der aus einer längeren, zylindrischen Stange 43 mit einem Handgriff 44 besteht, an dessen unteren Ende ein Zylinder 45 befestigt ist. Der Außendurchmesser dieses Zylinders ist etwas größer als der Innendurchmesser des Wickelkerns im Endbereich 2a.

Zum Trennen der beiden Spulenteile wird das Hilfswerkzeug 42 eingeschoben. Sobald der Zylinder 45 den unteren Endbereich 2a erreicht, werden die Laschen 9 mit den Rastzungen 10 nach außen gebogen und von den Rastflächen 24 getrennt. Daraufhin kann der Wikkelkern ohne weitere Maßnahmen vom Flansch 3 abgehoben werden.

Durch die erfindungsgemäße Gestaltung der Spule wird eine Spule geschaffen, die einerseits eine hohe Festigkeit aufweist, die aber andererseits auf einfache Weise und kostengünstig zu transportieren ist. Zum Zusammenfügen bzw. Trennen der Spule sind jeweils nur wenige Sekunden erforderlich.

Aufgrund der Stabilität der Spulen werden die Windungen insbesondere bei doppelkonischem Wickelbild so stabil auf der Spule gehalten, daß besondere Maßnahmen, wie Abbinden oder Umreifen des Gebindes nicht erforderlich sind.

Ein zweites Ausführungsbeispiel der Wickelspule wird nun in bezug auf die Fig. 8 bis 16 beschrieben.

Die insgesamt mit 50 bezeichnete Wickelspule weist einen konischen Wickelkern 52 auf und einen lösbar mit dem Wickelkern 52 verbundenen ersten Flansch 53, der am Ende des Wickelkerns angeordnet ist, welches den kleineren Durchmeser aufweist. Ein zweiter Flansch 54 ist am Ende des Wickelkerns mit größerem Durchmesser angeordnet und einstückig mit diesem ausgebildet. Die Spule ist insgesamt im wesentlichen rotationssymmetrisch zur Längsachse 56 gestaltet.

Der Wickelkern 52 mit dem daran angeformten Flansch 54 und der abnehmbare Flansch 53 bestehen aus Kunststoff.

Der Flansch 54 besteht aus einer aus einem im wesentlichen kreisringförmigen Wandteil 55, das sich in einer Ebene erstreckt, welche senkrecht zur Rotationsachse 56 der Spule liegt. Das Wandteil 55 ist durch senkrecht dazu angeordnete Verstärkungsrippen 57 verstärkt.

Das Wandteil 55 ist weiterhin mit einem zylindrischen Kreisring 58 verbunden, dessen Durchmesser größer ist als der obere Enddurchmesser des Wickelkernes. Der Ring 58 ist einstückig mit einer Vielzahl von Verstärkungsrippen 58a ausgebildet.

Der obere Flansch 54 ist weiterhin mit einer Anzahl von Bohrungen 59 versehen, welche zum Anbringen von Hebezeugen bzw. zum Befestigen eines Ablaufringes dienen.

Am äußeren Umfang des Flansches ist eine nach oben gerichtete Abkantung 60 vorgesehen, die in sich verrundet ist. Dadurch ist es möglich, den oberen Flansch 54 ohne Ablaufring unmittelbar als Ablaufhilfe einzusetzen.

Benachbart zu dieser Abkantung 60 ist ein zweiter zylindrischer Ring 61 vorgesehen, der den Flansch 54 zusätzlich versteift und mit den Verstärkungsrippen 57 verbunden ist.

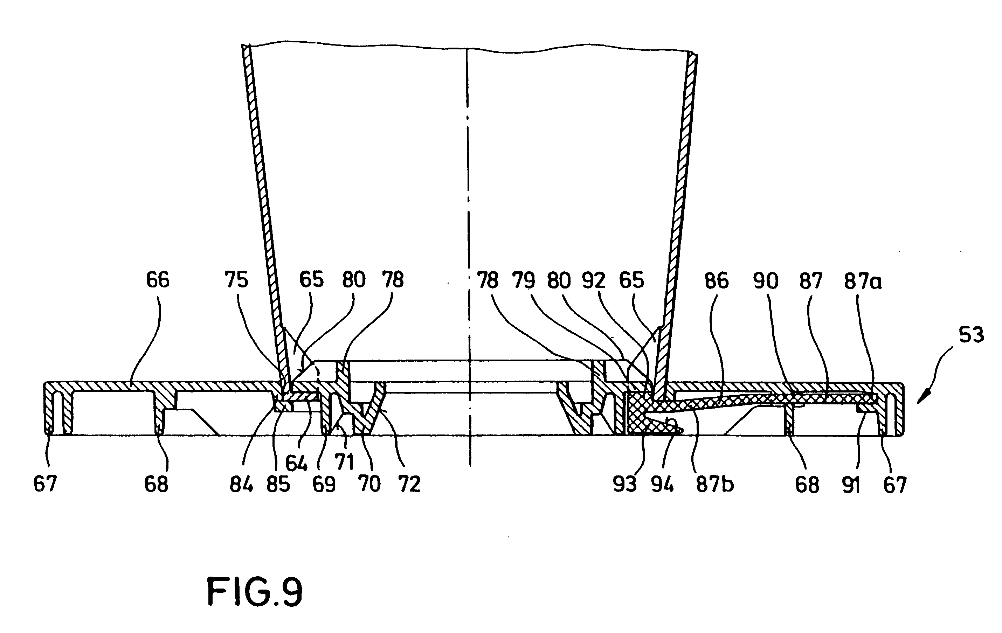

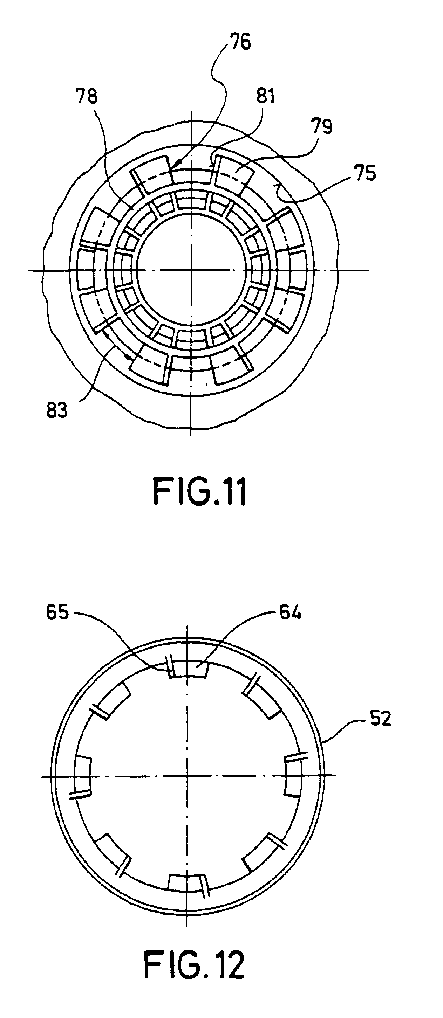

Am Ende des Wickelkerns mit dem kleineren Durchmesser sind, wie insbesondere aus der Fig. 12 zu ersehen ist, eine Vielzahl von nach innen ragenden Rastvorsprüngen 64 angeformt, wobei die Festigkeit der Rastvorsprünge 64 durch mit dem Innenbereich des Wickelkerns verbundene Radialstege 65 (siehe auch Fig. 9) erhöht ist.

Die Rastvorsprünge 64, beim Ausführungsbeispiel sind es acht Stück, sind im gleichen Abstand um den Innenumfang des Wickelkernes verteilt und sind so bemessen, daß der Abstand in Umfangsrichtung, bzw. die lichte Weite zwischen zwei benachbarten Rastvorsprüngen, etwas größer ist als die Länge der Rastvorsprünge selbst.

Beim Ausführungsbeispiel werden für eine typische Baugröße bei einem kleinsten Durchmesser des Wikkelkernes von 178 mm die Vorsprünge in etwa so bemessen, daß sie 5 bis 12 mm vom unteren inneren Rand des Wickelkerns aus nach innen vorspringen.

Der erste, lösbare Flansch 53 weist eine, im montierten Zustand, dem Wickelgut zugewandte kreisringförmige Platte 66 auf, welche eine äußere, dem Wickelgut abgewandte, ringartige Verstärkung 67 aufweist, die in Form von zwei konzentrischen Ringen gestaltet ist, eine zweite mittlere Verstärkung 68 in Form eines Ringes sowie eine dritte, innenliegende ringförmige Verstärkung 69. Konzentrisch zur Rotationsachse des Flansches (die im montierten Zustand der Rotationsachse der Spule entspricht), ist benachbart zum inneren Verstärkungsring 69 ein Zentrierring 70 vorgesehen, der eine konische Ausnehmung 72 aufweist.

Eine Vielzahl von äquidistant angeordneten Verstärkungsrippen 74 ist auf der dem Wickelgut abgewandten Seite des Flansches angeordnet, um den Flansch weiter zu verstärken. In einem äußeren Bereich des Flansches, zwischen dem äußeren Verstärkungsring 67 und dem mittleren Verstärkungsring 68, ist die Zahl der Rippen doppelt so hoch, wie zwischen dem mittleren Verstärkungsring 68 und dem inneren Verstärkungsring 69, um eine höhere Steifigkeit des Flansches in diesem Bereich zu bewirken.

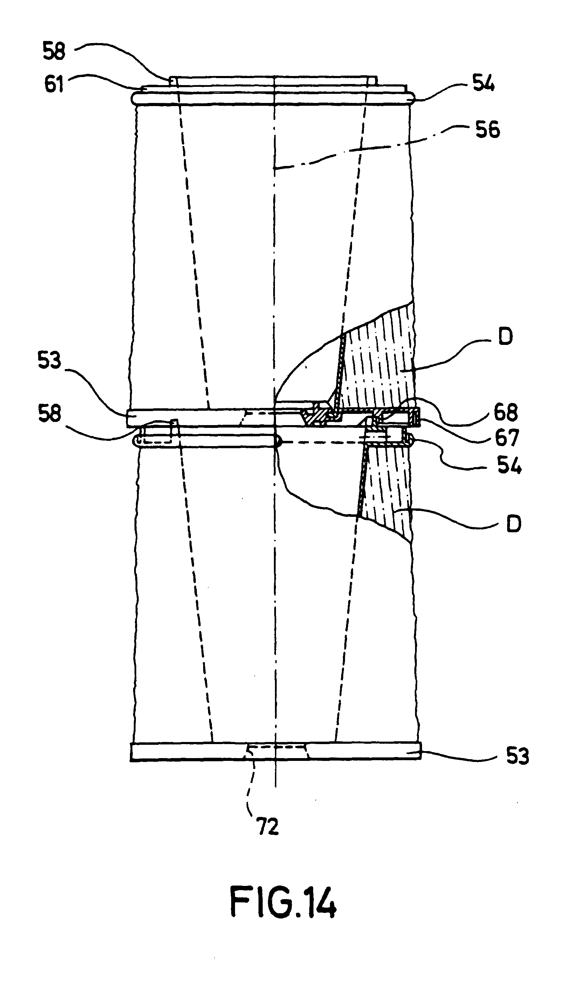

Der Durchmesser des Verstärkungsringes 68 ist geringfügig größer als der Durchmesser des Verstärkungsringes 58 des zweiten Flansches 54. Weiterhin weisen die Verstärkungsrippen 74 im Bereich des Verstärkungsringes 68 Einschnitte 74a (siehe Fig. 8) auf. Werden die bewickelten Spulen aufeinandergestapelt, wie dies in Fig. 14 gezeigt ist, greift der Verstärkungsring 58 des zweiten Flansches in diese Ausnehmungen 74a ein, wobei der obere Teil des Verstärkungsringes 58 in Anlage an den Verstärkungsring 68 kommt. Dadurch wird beim Stapeln die obere Spule exakt in bezug zur unteren Spule zentriert und ein Verrutschen der oberen Spule in bezug zur unteren Spule verhindert.

Auf der im montierten Zustand dem Wickelgut zugewandten Seite weist der Flansch 53 eine im wesentlichen kreisringförmige Ausnehmung 75 auf, in der eine Haltestruktur 76 angeordnet ist, die mit den Rastvorsprüngen 64 des Wickelkerns zusammenwirkt.

Die Haltestruktur 76 weist einen konzentrisch zur Rotationsachse angeordneten zylindrischen Ring 78 auf, von dem eine Anzahl von Haltevorsprüngen 79 radial nach außen vorspringen. An jedem der Haltevorsprünge ist eine sich in raidaler Richtung erstreckende Verstärkungsrippe 81 angeordnet, welche eine zusätzliche Verbindung zwischen den Haltevorsprüngen und dem Zylinderring 78 herstellen, und somit die Haltevorsprünge in axialer Richtung der Wickelspule versteifen.

Zwischen den Haltevorsprüngen 79 ist, wie durch den Doppelpfeil 83 angedeutet, in Umfangsrichtung ein Abstand vorgesehen, der etwas größer ist als die Abmessung der Rastvorsprünge 64 des Wickelkernes.

Die ringförmige Ausnehmung 75 wird, wie insbesondere aus der Fig. 9 zu entnehmen ist, durch einen ersten Wandabschnitt 84 gebildet, dessen vordere Wandfläche, die dem Wickelkern zugewandt ist, im gleichen Winkel zur Rotationsachse geneigt ist, wie die Wand des Wickelkernes 52. An diesen ersten Wandabschnitt 84 schließt sich ein zweiter Wandabschnitt 85 an, der senkrecht zur Rotationsachse angeordnet ist.

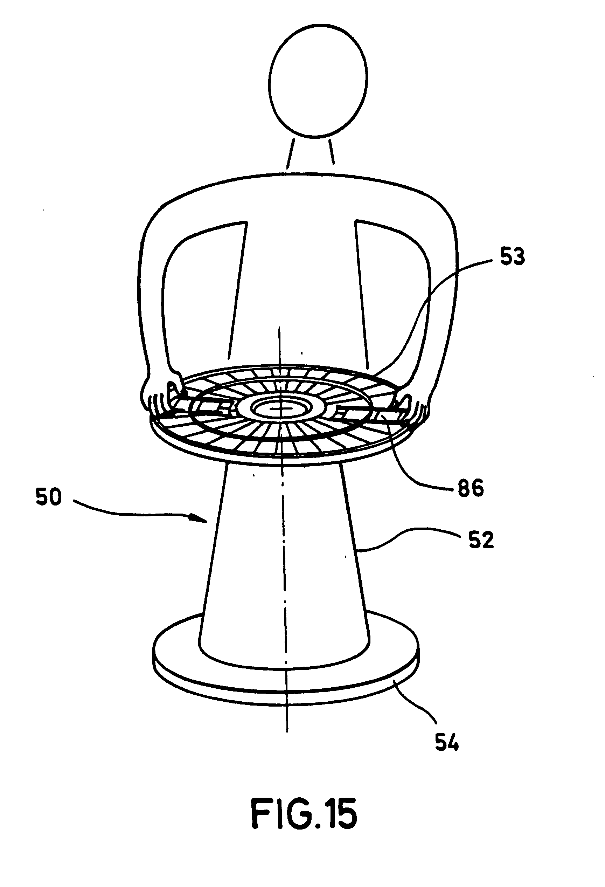

Die Verbindung zwischen Wickelkern und Flansch erfolgt, indem der Wickelkern so auf den Flansch aufgesetzt wird (vgl. auch Fig. 15), daß die Rastvorsprünge 64 im Bereich des Zwischenraumes 83 des Flansches liegen. Dadurch kann der Wickelkern so in den Flansch eingeführt werden, daß das untere Ende des Wickelkernes mit den Rastvorsprüngen 64 auf dem zweiten Wandabschnitt 85 aufliegt, wie dies in Fig. 9 dargestellt ist. Anschließend werden Wickelkern und Flansch relativ zueinander verdreht, bis die Stege 65 der Rastvorsprünge 64 an den Stegen 81 der Haltevorsprünge 79 anliegen. In dieser Position untergreift jeweils einer der Rastvorsprünge 64 einen zugeordneten Haltevorsprung 79, so daß eine axial gesicherte Verbindung zwischen Wickelkern und Flansch besteht.

Um die Verbindung auch radial zu sichern, ist zumindest ein Verriegelungselement vorgesehen, dessen Aufbau nun in bezug auf die Fig. 9, 10 und 11 beschrieben wird.

Das Verriegelungselement 86 besteht aus einem elastischen Material, wie Kunststoff oder Metall und weist eine längliche Platte 87 auf, die durch zwei Seitenstege 88 und 89 im Flansch geführt ist. Weiterhin ist im mittleren Verstärkungsring 68 eine Ausnehmung 90 vorgesehen, durch welche die Platte 87 geführt ist und der Verstärkungsring 67 ist mit einer radial nach innen ragenden Rippe 91 versehen, die eine Tasche bildet, in der das vom Wickelkern abgewandte Ende 87a der Platte des Verriegelungselementes 86 gehalten ist. In dieser Position ist die Platte 87 im wesentlichen parallel zu der dem Wickelgut zugewandten Fläche des Flansches 53 und wird in dieser Position gehalten.

An dem dem Wickelkern zugewandten Ende 87b der Platte ist, einstückig mit dieser, ein Steg 92 angeformt, dessen Breite etwas geringer ist als die Breite eines Zwischenraumes 83 zwischen zwei Haltevorsprüngen 79 des Flansches.

Auf der dem Steg 92 abgewandten Seite der Platte 87 ist eine keilartige Verdickung 93 angeformt, durch welche ein Keilspalt 94 gebildet ist.

Das vordere Ende 87b der Platte weist einen nur geringen Abstand zum inneren Verstärkungsring 69 des Flansches 53 auf, so daß das Verriegelungselement 86 durch die Rippe 91, die Ausnehmung 90 und die Rippe 69 unverlierbar am Flansch gehalten ist.

Nachfolgend wird nun die Funktion dieses Verriegelungselementes beschrieben.

Beim Einführen des Wickelkerns in die ringförmige Ausnehmung 75 des Flansches wird das Verriegelungselement (in der Darstellung gemäß Fig. 9) elastisch verformt und nach unten gedrückt. Sobald das untere Ende des Wickelkerns den zweiten Wandabschnitt 85 erreicht hat, wird der Wickelkern gedreht, wodurch die Rastvorsprünge 64 unterhalb der Vorsprünge 79 zu liegen kommen. In dieser Position wird der Zwischenraum zwischen den beiden benachbarten Haltevorsprüngen, zwischen denen das Verriegelungselement angeordnet ist, frei und das Verriegelungselement bewegt sich infolge der elastischen Rückstellkraft wieder nach oben. Dadurch wird der Zwischenraum zwischen diesen Haltevorsprüngen geschlossen und der Wickelkern und der Flansch an einer Relativbewegung in radialer Richtung zueinander gehindert. Der Flansch ist dann in diesem Zustand sowohl axial als auch radial in bezug auf den Wickelkern gesichert.

Die keilartige Vertiefung 93 hat eine doppelte Funktion.

Wie aus der Darstellung gemäß Fig. 1 zu entnehmen ist, liegt der untere Flansch 53 der Wickelspule 50 bei der Aufnahme in der Wickelvorrichtung auf der Stützplatte 109 auf. Da die keilförmige Verdickung mit ihrem (in der Darstellung gemäß Fig. 9) unteren Ende exakt mit den unteren Enden der Verstärkungsrippen 67, 68 und 69 übereinstimmt, liegt diese keilförmige Verdickung ebenfalls auf der Stützplatte 109 auf. Dadurch wird das Verriegelungselement an einer Bewegung in axialer Richtung zum Wickelkern gehindert, so daß eine Deformation des Verriegelungselementes und damit ein Freigeben der radialen Sicherung ausgeschlossen ist.

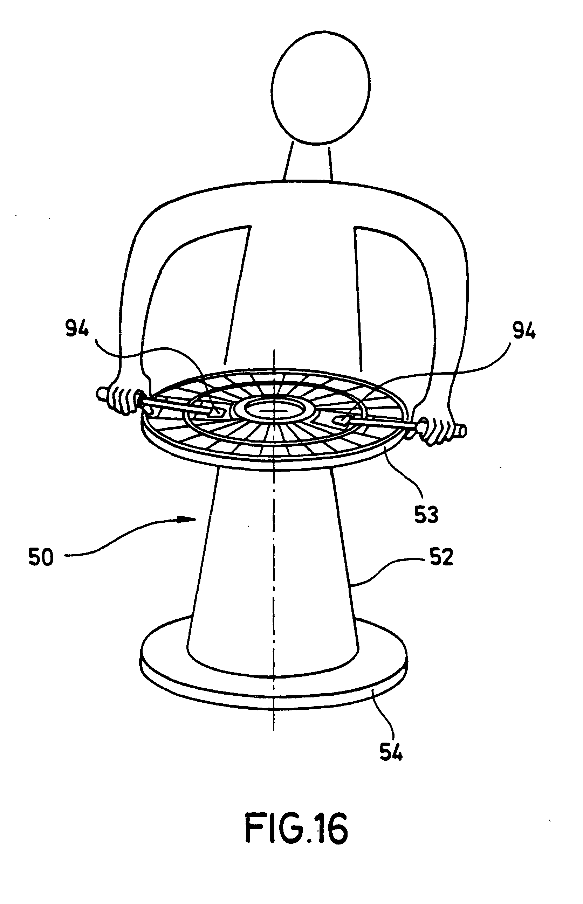

Zur Demontage des Wickelkerns kann, wie in Fig. 16 dargestellt ist, ein geeignetes Werkzeug, z.B. ein Schraubenzieher, in den Keilspalt 94 eingeführt wird. Der Keilspalt 94 und damit das vordere Ende 87b der Platte 87 werden dadurch (in der Darstellung gemäß Fig. 9) nach unten gedrückt, wodurch der Steg 92 den Zwischenraum zwischen den benachbarten Haltevorsprüngen freigibt, und Flansch und Wickelkern gegeneinanderverdreht werden können. Der Wikkelkern kann dann ohne weitere manuelle Tätigkeiten vom Flansch abgenommen werden.

Nach dem Trennen des lösbaren Flansches 53 vom Wickelkern 52 können die Wickelkerne in der gleichen Weise platzsparend gestapelt werden, wie dies in Fig. 3 dargestellt ist.

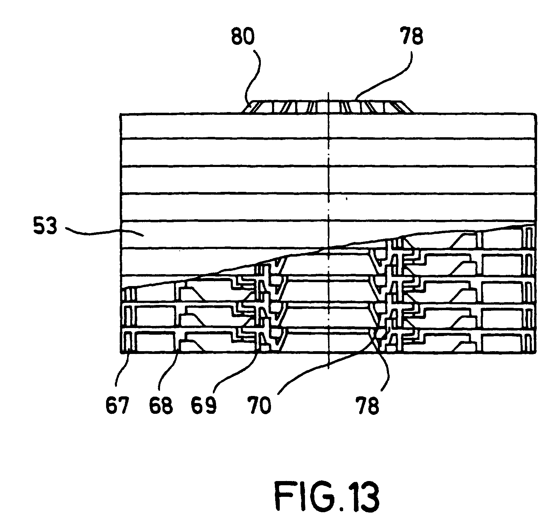

Wie in Fig. 13 gezeigt ist, können auch die lösbaren Flansche 53 der Spule 50 in entsprechender Weise wie die Flansche 3 (vgl. Fig. 4) platzsparend aufeinandergestapelt werden.

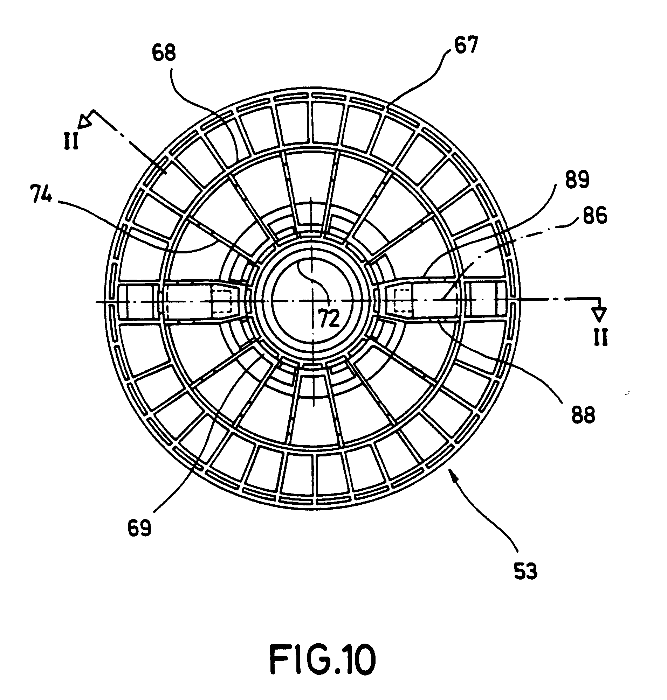

Beim Aufeinanderstapeln der Flansche greift (vgl. Fig. 9 und Fig. 13) der Ring 78 in den Zwischenraum 71 zwischen dem Ring 69 und dem Ring 70 des Flansches 53 ein. Dazu weist der Ring 69 eine Reihe von Einkerbungen, die in Fig. 9 und 10 angedeutet sind, auf, in die die Stege 81 beim Aufeinanderstapeln eingreifen.

Durch das Zusammenwirken von Ring 78, Ring 69 und Ring 70 werden die Flansche radial zueinander gesichert, so daß sie sich im gestapelten Zustand nicht gegeneinander verschieben können. Die Stege 81 und die zugeordneten Einkerbungen bewirken darüber hinaus noch eine Verdrehsicherung der Flansche im gestapelten Zustand.

Durch die vorliegende Erfindung wird also ein Verfahren und eine Vorrichtung vorgeschlagen, durch das bzw. durch die ein Gebinde erzeugt werden kann, das aus einer Wickelspule mit dem darauf aufgewickelten Draht bzw. Kabel besteht, und welches in besonders vorteilhafter Weise zu transportieren und zu verarbeiten ist. Da das Gebinde, insbesondere bei Verwendung eines doppelkonischen Wicklungsaufbaus, eine hohe Festigkeit aufweist, ist der Transport ohne weiteres Verpackungsmaterial möglich. Dadurch fällt beim Verwender dieser Gebinde kein Abfall mehr an. Aufgrund der bequemen Stapelbarkeit der durch die Erfindung vorgeschlagenen teilbaren Kunststoffspule kann die Kunststoffspule beim Verwender platzsparend aufbewahrt werden und auch platzsparend wieder zum Draht- bzw. Kabelhersteller zurücktransportiert werden.

## Patentansprüche

1. Verfahren zur Herstellung eines unverpackt transportfähigen Gebindes mit langgestrecktem Wickelgut, welches folgende Verfahrensschritte in zeitlicher Abfolge aufweist:
Zusammensetzen einer Wickelspule, welche einen konischen Wickelkern und zwei Flansche aufweist, indem zumindest der Flansch an der Seite des Wickelkerns mit dem kleineren Durchmesser, mit dem Wickelkern lösbar verbunden wird;
Einbringen der Wickelspule in eine Wickelvorrichtung;
Aufnehmen der Wickelspule in der Wickelvorrichtung mittels zweier Spulenaufnahmeeinrichtungen, welche die beiden Flansche zentrieren und auf ihrer dem Wickelkern abgewandten Fläche zur Aufnahme des Wickeldrucks abstützen;
Aufwickeln des Wickelgutes auf die Wickelspule mit einer Verlegeeinrichtung, welche durch eine Steuereinrichtung derart gesteuert ist, dass sich ein vorbestimmtes Wickelbild auf der Spule ergibt;
Sichern der Verbindung zwischen lösbarem Flansch und Wickelkern mittels wenigstens eines Verriegelungselementes, so dass sich der lösbare Flansch beim Wickeln und Transportieren nicht vom Wickelkern lösen kann;
wobei diese Spulenaufnahmeeinrichtungen während des Aufnehmens derart mit diesem mindestens einem Verriegelungselement zusammenwirkt, dass das Verriegelungselement in seiner Verriegelungsstellung blockiert ist;
Beenden des Wickelvorgangs und Entnehmen der Wickelspule aus der Wickelvorrichtung, sobald ein gewünschter Füllungsgrad der Spule erreicht ist, wobei
vorher, gleichzeitig oder anschließend das Wickelgut abgeschnitten und das spulenseitige Ende des Wickelgutes an der Wickelspule festgelegt wird.

2. Verfahren gemäß Anspruch 1, **dadurch gekennzeichnet, dass** zumindest eine Spulenaufnahmeeinrichtung mit einer Antriebseinrichtung derart verbunden ist, dass die Wickelspule zum Aufwickeln des Wickelgutes durch die Spulenaufnahmeeinrichtung gedreht wird.

3. Verfahren gemäß Anspruch 1, **dadurch gekennzeichnet, dass** die Verlegeeinrichtung mit einer Antriebseinrichtung verbunden ist, durch welche die Verlegeeinrichtung zum Aufwickeln des strangförmigen Gutes um die stillstehende Spule herumbewegt wird.

4. Verfahren gemäß einem der Ansprüche 1 bis 3, **gekennzeichnet durch** folgende weitere Verfahrensschritte:
Positionieren der Verlegeeinrichtung nach dem Aufnehmen der Spule im Bereich des Endes des Wickelkernes mit dem kleineren Durchmesser;
Wickeln einer ersten Wickellage mit einer vorgegebenen Windungszahl und einer vorgegebenen Windungssteigung;
Zurückführen der Verlegeeinrichtung in diese erste Position an der kleinsten Stelle des Wickelkerns, wobei eine zweite Wickellage mit gleicher Windungszahl und gleicher Windungssteigung gebildet wird;
Aufbringen weiterer Wickellagen, mit jeweils zunehmender Anzahl von Windungen,
wobei die jeweilige Anzahl der Windungen so gewählt ist, dass sich ein Wickelbild auf der Spule ergibt, in welchem zumindest ein Teil der Wickellagen im Längsschnitt der Spule gesehen, gegen den Wickelkern geneigt sind,
Fortführen dieser Wicklungsvorgänge mit zunehmender Windungszahl, bis eine Endwindungszahl erreicht ist, bei welchem die Wickellage das zweite Ende des Wickelkerns mit dem größeren Durchmesser erreicht,
Fortführen des Wickelvorgangs, indem weitere Wickellagen aufgebracht werden, deren Windungszahl entweder gleich groß ist, wie diese Endwindungszahl, oder dieser gegenüber abnimmt.

5. Verfahren gemäß Anspruch 4, **dadurch gekennzeichnet, dass** die Zunahme der Windungszahlen der aufeinanderfolgenden Wickellagen so bemessen ist, dass nach dem Aufbringen einer Anzahl von Wickellagen und vor dem Erreichen dieser Endzahl von Windungen der Abstand zumindest einiger dieser individuellen Wickellagen zur Rotationsachse der Wickelspule im Bereich des Flansches, welcher am Ende des Wickelkerns mit kleinem Durchmesser angeordnet ist, sein Maximum erreicht.

6. Vorrichtung zum Aufwickeln von langgestrecktem Wickelgut auf eine Wickelspule zur Herstellung eines unverpackt transportfähigen Gebindes und insbesondere zur Durchführung des Verfahrens gemäß einem der Ansprüche 1 bis 5, mit:
zwei Spulenaufnahmeeinrichtungen, welche die Spulen in ihren Endbereichen aufnehmen und zentrieren, wobei die Spulenaufnahmeeinrichtungen so angeordnet sind, dass die Längsachse einer damit aufgenommenen Wickelspule im wesentlichen vertikal ausgerichtet ist;
einer Verlegeeinrichtung, durch welche das langgestreckte Wickelgut der Spule zugeführt wird, wobei diese Verlegeeinrichtung parallel zur Spulenlängsachse bewegbar ist;
einer Antriebseinrichtung, welche derart mit der Spulenaufnahmeeinrichtung oder mit der Verlegeeinrichtung verbunden ist, dass entweder die Spule oder die Verlegeeinrichtung um die Längsachse der Spule rotiert;
einer Hubeinrichtung, durch welche zumindest eine der Spulenaufnahmeeinrichtungen relativ zur Spule bewegbar ist, so dass die Wickelspule in die Wickelvorrichtung eingebracht bzw. von dieser entnommen werden kann;
einer Steuereinrichtung, durch welche die Rotationsbewegung der Wickelspule bzw. der Verlegeeinrichtung und die Bewegung der Verlegeeinrichtung parallel zur Spule derart gesteuert wird, dass auf der Spule ein vorbestimmtes Wickelbild entsteht;
**dadurch gekennzeichnet,**
**dass** die Spulenaufnahmeeinrichtungen so gestaltet sind, dass sie eine aus Kunststoff bestehende Wickelspule.mit konischem Kern aufnehmen, bei welcher zumindest ein Flansch der Wickelspule lösbar mit dem Kern verbunden ist,
**dass** die erste, untere Spulenaufnahmeeinrichtung (103) eine Platte (108, 109) aufweist, durch unmittelbar abgestützt wird;
**dass** auf dieser Stützplatte ein Konus (111) angeordnet ist, der in eine entsprechend gestaltete Bohrung (72) des Flansches (53) zur Zentrierung der Wickelspule eingreift;
**dass** die zweite, obere Spulenaufnahmeeinrichtung (104) eine im wesentlichen kreisförmige Platte (120) aufweist, welche so ausgebildet ist, dass ein oberer Flansch der Wickelspule durch die Spulenaufnahme abgestützt ist;
**dass** diese Platte (120) eine erste, zur Wickelspule hin vorspringende Zentriereinrichtung (112) aufweist, welche an der Innenwand des Wickelkernes in dessen oberen Ende anliegt,
**dass** zur Sicherung der Verbindung zwischen dem lösbaren ersten Flansch und dem Wickelkern ein Verriegelungselement (86) vorgesehen ist, welches die Verbindung zwischen diesem Flansch und diesem Wickelkern sichert, und welches sich in axialer Richtung der Spule zwischen einer Verriegelungsposition und einer Entriegelungsposition bewegt,
und **dass** dieses Verriegelungselement auf dieser Platte (109) der unteren Spulenaufnahmeeinrichtung (103) aufliegt, so dass eine axiale Bewegung in eine Entriegelungsstellung verhindert ist.

7. Vorrichtung gemäß Anspruch 6, **dadurch gekennzeichnet, dass** diese Zentriereinrichtung (112) als Rippe ausgebildet ist, die an dieser Platte (120) befestigt ist.

8. Vorrichtung gemäß Anspruch 7, **dadurch gekennzeichnet, dass** eine zweite Rippe (113) konzentrisch zu dieser Zentrierrippe (112) an der Platte (120) angeordnet ist, durch welche dieser obere Flansch (54) der Wickelspule abgestützt ist.

9. Vorrichtung gemäß einem der Ansprüche 6 bis 8, **dadurch gekennzeichnet, dass** diese Hubeinrichtung mit der Platte (120) der oberen Spulenaufnahme verbunden ist.

10. Wickelspule zur Herstellung eines unverpackt transportfähigen Gebindes und insbesondere zur Verwendung in dem Verfahren gemäß Anspruch 1 bzw. mit der Vorrichtung gemäß Anspruch 6, wobei die Wickelspule zur Aufnahme von langgestrecktem Wickelgut und besonders von Wickelgut, welches Metall enthält, wie Draht, Litze, mit Kunststoff umhüllte Litze usw., vorgesehen ist, mit einem im wesentlichen rotationssymmetrischen, konischen hohlen Wickelkern, welcher ein erstes Ende mit kleinerem Durchmesser und ein zweites Ende mit größerem Durchmesser aufweist, wobei der Hohlraum (2e) des konischen Wickelkerns (2) konisch gestaltet ist, und der Konizitätswinkel (18) des Außenmantels (2c) und der Konizitätswinkel (19) des Innenmantels (2d) im wesentlichen übereinstimmen, und wobei der Hohlraum (2e) gegenüber dem zweiten Ende mit großem Durchmesser offen ist,
einem Flansch, welcher an dem zweiten Ende des Wickelkerns mit größerem Durchmesser angeordnet ist,
**dadurch gekennzeichnet,**
**dass** die Wickelspule einen ersten und einen zweiten Flansch aufweist, wobei an dem ersten Ende des Wickelkerns (2a) mit kleinerem Durchmesser (2a) dieser erste Flansch (3) lösbar befestigt ist, und wobei
Verbindungsmittel (9, 10, 23) vorgesehen sind, die diesen ersten Flansch (3) und den Wickelkern (2) miteinander verbinden, und die derart gestaltet sind, dass sich der Flansch während der Bewicklung und während des Transportes nicht vom Wickelkern lösen kann,
wobei diese Verbindungsmittel voneinander beabstandete, radial nach innen ragende Rastvorsprünge (64) aufweisen, welche im montierten Zustand mit ent-sprechend gestalteten, sich ebenfalls in radialer Richtung erstreckenden Haltevorsprüngen (79) an dem abnehmbaren Flansch (53) zusammenwirken, so dass abnehmbarer Flansch und Wickelkern in Axialrichtung, d.h. in Längsrichtung, der Rotationsachse (56) der Wickelspule (50) relativ zueinander gehalten sind,
**dass** wenigstens ein aus einem elastischen Material, wie Kunststoff oder Metall bestehendes Verriegelungselement (86) vorgesehen ist, welches eine sich in radialer Richtung erstreckende längliche Platte (87), aufweist, die durch zwei Seitenstege (88; 89) im Flansch geführt ist und die Verbindung zwischen lösbarem Flansch und Wickelkern sichert,
**dass** die Haltevorsprünge (79) einen Abstand in Umfangsrichtung des Flansches (53)gesehen zueinander aufweisen, der größer ist als die Länge dieser Rastvorsprünge (64) und dass Haltevorsprünge (79) und Rastvorsprünge (64) derart miteinander in Eingriff gebracht werden, dass der Wickelkern (52) mit den Rastvorsprüngen zunächst zwischen diese Haltevorsprünge gesetzt und dass dann Flansch und Wickelkern um einen vorbestimmten Winkel gegeneinander verdreht werden, so dass diese Haltevorsprünge und diese Rastvorsprünge in Eingriff miteinander kommen, und
**dass** das zumindest eine Verriegelungselement (86) in den Zwischenraum zwischen diesen Haltevorsprüngen (79) eingreift und diesen Zwischenraum schließt und dadurch eine Relativbewegung von Wickelkern (52) und abnehmbarem Flansch (53) blockiert.

11. Wickelspule gemäß Anspruch 10, **dadurch gekennzeichnet, dass** der Wickelkern (2; 52) aus Kunststoff besteht.

12. Wickelspule gemäß Anspruch 10 oder 11, **dadurch gekennzeichnet, dass** der abnehmbare Flansch (3; 53) aus Kunststoff besteht.

13. Wickelspule gemäß mindestens einem der vorhergehenden Ansprüche, **dadurch gekennzeichnet, dass** die Spule einen zweiten Flansch (4; 54) am Ende des Wickelkernes mit großem Durchmesser aufweist, welcher fest mit dem Wickelkern (2) verbunden ist, und vorzugsweise einstückig mit dem Wickelkern (2) ausgebildet ist.

14. Wickelspule gemäß Anspruch 10, **dadurch gekennzeichnet, dass** dieses Verriegelungselement (86) als elastisch verformbares Element ausgebildet ist, welches im abnehmbaren Flansch gehalten ist, und welches beim Zusammenfügen von Wickelkern (52) und Flansch (53) bzw. von außen her mittels eines Werkzeuges derartig elastisch verformbar ist, dass es im verformten Zustand den Zwischenraum zwischen diesen Haltevorsprüngen freigibt, so dass eine Drehbewegung zwischen dem Wickelkern und diesem abnehmbaren Wickelkern möglich ist, und dass es nach dieser Verformung in seine Ausgangsposition zurückkehrt, in welcher eine Drehbewegung zwischen Wickelkern und abnehmbaren Flansch verhindert wird.

15. Wickelspule gemäß einem der Ansprüche 10 oder 14, **dadurch gekennzeichnet, dass** das Verriegelungselement eine Verdickung (93) aufweist, welche so gestaltet ist, dass das Verriegelungselement nicht in eine Position, in der die Verdrehung des Wickelkerns freigegeben ist, gelangt, wenn die Wickelspule (50) mit dem abnehmbaren Flansch (53) auf einer ebenen Fläche bzw. auf einer entsprechend gestalteten Fläche aufsteht.

16. Wickelspule gemäß mindestens einem der Ansprüche 10 bis 15, **dadurch gekennzeichnet, dass** der abnehmbare Flansch (3; 53) eine im wesentlichen kreisscheibenförmige Flanschfläche (26; 66) aufweist und dass, an der dem Wickelkern abgewandten Seite dieses scheiben-artigen Teiles in Umfangsrichtung und in radialer Richtung verlaufende Verstärkungsrippen vorgesehen sind.

17. Wickelspule gemäß mindestens einem der Ansprüche 10 bis 16, **dadurch gekennzeichnet, dass** am festen Flansch (4, 54) in Umfangsrichtung und in radialer Richtung verlaufende Verstärkungsrippen vorgesehen sind.

18. Wickelspule gemäß Anspruch 16 und 17, **dadurch gekennzeichnet, dass** die Verstärkungsrippen des abnehmbaren Flansches (3; 53) und des oberen Flansches (4; 54) so gestaltet sind, dass beim Übereinanderstapeln mehrerer montierter und ggf. gefüllter Spulen die Verstärkungsrippen vom oberen und unteren Flansch so ineinander eingreifen, dass eine formschlüssige Verbindung geschaffen ist, die ein Verrutschen der Flansche relativ zueinander verhindert.

## Claims

1. Process for manufacturing a package with elongated winding material which can be transported without packaging, including the following procedure steps in chronological sequence:
composing a winding bobbin, having a conical winding core and two flanges, in which at least the flange an the winding core side having a smaller diameter is detachably connected to the winding core;
integrating the winding bobbin into the winding device;
receiving the winding bobbin in the winding device by means of two bobbin holding members, centering the two flanges and supporting them against the winding pressure an the surface opposing the winding core;
winding up the winding material an the winding bobbin with a traversing unit, controlled by a control unit, such that a predetermined winding type will be formed an the bobbin;
securing the connection between detachable flange and winding core via at least one locking element, such that the detachable flange cannot get loose from the winding core during winding and transport,
terminating the winding process and removing the winding bobbin from the winding device as soon as the bobbin is as full as desired,
the winding material being cut prior to that, at the Same time or subsequently and the end of the winding material will be fixed at the winding bobbin.

2. Process according to claim 1, **characterized in that** at least one bobbin holding member is connected to a drive unit such that the winding bobbin will be turned by the bobbin holding member for winding up the winding material.

3. Process according to claim 1, **characterized in that** the traversing unit is connected to a drive unit, moving the traversing unit around the stationary bobbin for winding up the elongated material.

4. Process according to one of claims 1 to 3,
**characterized by** the following procedure steps:
positioning the traversing unit after receiving the bobbin at the end of the winding core having the smaller diameter;
winding up a first winding layer with a predetermined winding number and a predetermined winding pitch;
returning the traversing unit into this first Position at the smallest spot of the winding core, forming a second winding layer with the Same winding number and the same winding pitch;
applying further winding layers with an ever increasing number of windings,
the relevant number of windings being chosen such that a winding type will be formed an the bobbin, in which at least part of the winding layers are inclined towards the winding core as seen in the longitudinal section of the bobbin,
continuation of these winding processes with increasing winding number, until an end winding number is reached, where the winding layer reaches the second end of the winding core having the larger diameter,
continuation of this winding process by applying further winding layers, with a winding number either equally large as this end winding number or decreasing with regard to it.

5. Process according to claim 4, **characterized in that** the increase of winding numbers of the successive winding layers is such that after applying a number of winding layers and prior to reaching this end winding number the distance of at least some of these individual winding layers to the axis of rotation of the winding bobbin at the flange, arranged at the end of the winding core with smaller diameter, reaches its maximum.

6. Device for winding up elongated winding material an a winding bobbin in order to produce a package that can be transported without packaging and in particular for performing the process according to one of claims 1 to 5 with
two bobbin holding members, receiving the bobbins at their ends and centering them, the bobbin holding members being arranged such that the longitudinal axis of the received winding bobbin is basically vertical;
a traversing unit, supplying the elongated winding material to the bobbin, this traversing unit being movable parallel to the bobbin's longitudinal axis;
a drive unit, connected to the bobbin holding member or to the traversing unit in such a way that either the bobbin or the traversing unit rotate around the bobbin's longitudinal axis;
a lifting equipment making at least one of the bobbin holding members movable with regard to the bobbin, such that the winding bobbin can be put in or removed from the winding device;
a control unit, controlling the rotational motion of the winding bobbin and/or the traversing unit and the motion of the traversing unit parallel to the bobbin in such a way that a predetermined winding type will be formed an the bobbin;
**characterized in that**
the bobbin holding members are designed such that they receive a plastic winding bobbin having a conical core, with at least one flange of the winding bobbin being detachably connected to the core;
the first, lower bobbin holding member (103) includes a plate (108, 109), supporting directly the first, lower flange (53) of the winding bobbin;
a cone (111) is arranged on said supporting plate, engaging into an adequately shaped boring (72) of the flange (53) for centering the winding bobbin;
the second, upper bobbin holding member (104) includes a basically circular plate (120), designed in such a way that an upper flange of the winding bobbin is supported by the bobbin holding member; and
said plate (120) including a first centering unit (112) protruding towards the winding bobbin, being adjacent to the inner wall of the winding core in its upper end,
a locking element (86) is provided for securing the connection between the first detachable flange and the winding core, which secures the connection between said flange and said winding core and which moves in an axial direction of the bobbin between a locked position and an unlocked position, and
said locking element bearing on said plate (109) of said lower bobbin holding member (103), such that axial movement in an unlocked position is prevented.

7. Device according to claim 6, **characterized in that** this centering unit (112) is designed as rib, fixed to this plate (120).

8. Device according to claim 7, **characterized in that** a second rib (113) is arranged concentrical to this centering rib (112) an the plate (120), supporting this upper flange (54) of the winding bobbin.

9. Device according to one of claims 6 to 8, **characterized in that** this lifting equipment is connected to the plate (120) of the upper bobbin holding member.

10. Winding bobbin for manufacturing a package which can be transported without packaging and in particular for use in the process according to claim 1 or with the device according to claim 6, the winding bobbin being designed for holding elongated winding material and in particular winding material containing metal, such as wire, strands and plastic coated strands, with
a basically rotationally symmetrical, conical hollow winding core, having a first end with smaller diameter and a second end with larger diameter, the hollow space (2e) of the conical winding core (2) being designed conically and the coning angle (18) of the outer jacket (2c) and the coning angle (19) of the inner jacket (2d) being basically identical, the hollow space (2e) opposing the second end with larger diameter being open,
a flange, arranged at the second end of the winding core having a larger diameter,
**characterized in that**
the winding bobbin includes a first and a second flange, this first flange (3) being detachably fastened to the first end of the winding core (2a) with smaller diameter (2a) and
connecting means (9, 10, 23) are being provided, connecting this first flange (3) and the winding core (2) with each other, being designed such that the flange cannot loosen from the winding core during winding and transport,
wherein said connecting means include snap-in juts (64) spaced from each other and protruding radially to the inside, which interact with adequately designed, radially extending holding juts (79) at the detachable flange (53), when assembled, such that the detachable flange and the winding core are held relative to each other in axial direction, i.e. in longitudinal direction of the axis of rotation (56) of the winding bobbin (50), and
at least one locking element (86) is provided consisting of an elastic material, such as plastic or metal, having an elongate plate (87) extending in a radial direction, guided by two lateral racks (88, 89) in the flange and securing the connection between detachable flange and winding core,
said holding juts (79) being arranged at a distance to each other as seen in circumferential direction of the flange (53), being larger than the length of these snap-in juts (64), wherein the holding juts (79) and snap-in juts (64) are brought in engagement with each other such that the winding core with the snap-in juts is at first put between these holding juts and then flange and winding core are twisted relative each other by a predetermined angle, such that said holding juts and said snap-in juts come into engagement, and
said at least one locking element (86) engaging into the space between these holding juts (79) and closing this space thereby blocking a relative motion of winding core (52) and detachable flange (53).

11. Winding bobbin according to claim 10, **characterized in that** the winding core (2; 52) is made of plastic.

12. Winding bobbin according to claim 10 or 11,
**characterized in that** the detachable flange (3; 53) is made of plastic.

13. Winding bobbin according to at least one of the proceeding claims, **characterized in that** the bobbin includes a second flange (4; 54) at the end of the winding core with larger diameter, being fixed to the winding core (2) and preferably designed as one piece with the winding core (2).

14. Winding bobbin according to claim 10, **characterized in that** this locking element (86) is designed as elastically deformable element, hold in the detachable flange, which is elastically deformable when composing the winding core (52) and the flange (53) or from the outside by means of a tool, such that in the deformed state it sets free the space between these holding juts, such that it permits a turning motion between the winding core and this detachable flange; after this deformation it returns to its original position, preventing a turning motion between winding core and detachable flange.

15. Winding bobbin according to one of claims 10 or 14, **characterized in that** the locking element includes an enlargement (93), designed such that the locking element cannot move into a position, permitting a twist of the winding core, when the winding bobbin (50) with the detachable flange (53) meets a level surface or an adequately formed surface.

16. Winding bobbin according to at least one of claims 10 to 15, **characterized in that** the detachable flange (3; 53) has a basically annular flange surface (26; 66) and an the side of this disk-type part opposing the winding core, enforcing ribs are provided extending in circumferential direction and in radial direction.

17. Winding bobbin according to at least one of claims 10 to 16, **characterized in that** enforcing ribs are provided at the fixed flange (4; 54) in circumferential and in radial direction.

18. Winding bobbin according to claims 16 and 17, **characterized in that** the enforcing ribs of the detachable flange (3; 53) and the upper flange (4; 54) are designed such that when stacking several assembled and possibly full bobbins are stacked one upon the other, the enforcing ribs of the upper and lower flange engage such that a positive connection is formed, preventing a slipping of the flanges relative to each other.

## Revendications

1. Procédé pour réaliser un paquet non emballé et capable d'être transporté, avec un matériau allongé à bobiner, ledit procédé comprenant les étapes de procédé suivantes en succession temporelle:
assemblage d'un noyau de bobinage qui comprend une âme de bobinage conique et deux brides, dans lesquelles au moins la bride située du côté de l'âme de bobinage qui présente le plus petit diamètre est reliée de façon détachable à l'âme de bobinage;
introduction du noyau de bobinage dans un appareil de bobinage;
réception du noyau de bobinage dans l'appareil de bobinage au moyen de deux dispositifs de réception de noyau, qui centrent les deux brides et qui supportent les deux surfaces détournées de l'âme de bobinage pour encaisser la pression de bobinage;
enroulement du matériau à bobiner sur le noyau de bobinage avec un dispositif de dépose qui est commandé par un dispositif de commande de telle manière qu'il en résulte un motif d'enroulement prédéterminé sur le noyau;
fixation de la liaison entre la bride détachable et l'âme de bobinage par au moins un élément de verrouillage, de sorte que la bride détachable ne puisse se détacher de l'âme de bobinage lors de l'enroulement et du transport;
terminaison de l'opération d'enroulement et enlèvement du noyau de bobinage hors de l'appareil de bobinage dès qu'on a atteint un degré de remplissage souhaité pour le noyau, et dans lequel antérieurement, simultanément ou ensuite, le matériau à enrouler est coupé et l'extrémité côté bobine du matériau à bobiner est fixée sur le noyau de bobinage.

2. Procédé selon la revendication 1, **caractérisé en ce que** l'un au moins des dispositifs de réception de noyau est relié à un dispositif d'entraînement de telle façon que le noyau de bobinage est tourné par le dispositif de réception de noyau, pour le bobinage du matériau à bobiner.

3. Procédé selon la revendication 1, **caractérisé en ce que** le dispositif de dépose est relié à un dispositif d'entraînement au moyen duquel le dispositif de dépose est déplacé autour du noyau stationnaire pour le bobinage du matériau en forme de bande.

4. Procédé selon l'une quelconque des revendications 1 à 3, **caractérisé par** les étapes de procédé supplémentaires suivantes:
positionnement du dispositif de dépose après réception du noyau dans la région de l'extrémité de l'âme de bobinage avec le petit diamètre;
bobinage d'une première couche de bobinage avec un nombre de spires prédéterminé et un pas de spires prédéterminé;
retour du dispositif de dépose dans cette première position à l'emplacement le plus petit de l'âme de bobinage, et en formant une seconde couche de bobinage avec le même nombre de spires et le même pas de spires;
réalisation de couches de bobinage supplémentaires qui présentent respectivement des nombres croissants de spires;
le nombre respectif des spires est choisi de manière à ce qu'il en résulte sur le noyau un motif de bobinage dans lequel au moins une partie des couches de bobinage sont inclinées contre l'âme de bobinage, vues en coupe longitudinale du noyau;
on poursuit ces opérations d'enroulement avec un nombre de spires croissant, jusqu'à atteindre un nombre final de spires pour lequel la couche de bobinage atteint la seconde extrémité de l'âme de bobinage avec le plus grand diamètre;
on poursuit l'opération d'enroulement en appliquant d'autres couches de bobinage dont les nombres de spires sont soit égaux soit décroissants par rapport à ce nombre final de spires.

5. Procédé selon la revendication 4, **caractérisé en ce que** l'accroissement des nombres de spires des couches de bobinage successives est choisi de telle sorte qu'après application d'un certain nombre de couches de bobinage et avant d'avoir atteint ce nombre final de spires, la distance entre au moins quelques-unes de ces couches de bobinage individuelles et l'axe de rotation du noyau de bobinage, dans la région de la bride agencée à l'extrémité de l'âme de bobinage qui présente le petit diamètre, atteint son maximum.

6. Dispositif pour bobiner un matériau de bobinage allongé sur un noyau de bobinage pour réaliser un paquet non emballé et capable d'être transporté, et en particulier pour mettre en oeuvre le procédé selon l'une quelconque des revendications 1 à 5, comprenant:
deux dispositifs de réception de noyau qui reçoivent et centrent les noyaux dans leur zone terminale, lesdits dispositifs de réception de noyau étant agencés de telle manière que l'axe longitudinal d'un noyau de bobinage reçu par ceux-ci est dirigé sensiblement verticalement
un dispositif de dépose, au moyen duquel le matériau de bobinage allongé est amené au noyau, ledit dispositif de dépose étant mobile parallèlement à l'axe longitudinal du noyau;
un dispositif d'entraînement qui est relié au dispositif de réception de noyau ou au dispositif de dépose de telle façon que le noyau ou le dispositif de dépose tourne autour de l'axe longitudinal du noyau;
un dispositif de levage au moyen duquel l'un au moins des dispositifs de réception de noyau peut être déplacé par rapport au noyau, de sorte que le noyau de bobinage peut être introduit dans le dispositif de bobinage, ou enlevé de celui-ci;
un dispositif de commande au moyen duquel le déplacement de rotation du noyau de bobinage, ou du dispositif de dépose, et le déplacement du dispositif de dépose parallèlement au noyau, sont commandés de telle façon qu'il apparaît sur le noyau un motif de bobinage prédéterminé;
**caractérisé en ce que**:
les dispositifs de réception de noyau sont conçus de manière à recevoir un noyau de bobinage en matière plastique avec une âme conique, dans lequel une bride
au moins du noyau de bobinage est reliée de façon détachable à l'âme;
le premier dispositif de réception de noyau (103), ou dispositif inférieur, comporte une plaque (108, 109), au moyen duquel la première bride (53) ou bride inférieure du noyau de bobinage est directement soutenue;
sur cette plaque de soutien est agencé un cône (111) qui s'engage dans un perçage de conception correspondante (72) de la bride (53) pour le centrage du noyau de bobinage;
le second dispositif de réception de noyau (104) ou dispositif supérieur, comporte une plaque (120) sensiblement de forme circulaire, laquelle est réalisée de telle manière qu'une bride supérieure du noyau de bobinage est soutenue par le dispositif de réception de noyau; et
cette plaque (120) comporte un premier dispositif de centrage (112), en saillie vers le noyau de bobinage, qui s'applique contre la paroi intérieure de l'âme de bobinage dans son extrémité supérieure,
un élément de verrouillage (86) est prévu pour la fixation de la jonction entre la première bride détachable et l'âme de bobinage qui assure la jonction entre ladite bride et ladite âme de bobinage et qui bouge dans une direction axiale du bobinage entre une position verrouillée et une position déverrouillée,
et ledit élément de verrouillage appuie sur ladite plaque (109) du dispositif inférieur de réception de noyau (103) de telle sorte qu'on empêche un mouvement axiale dans une position déverrouillée.

7. Dispositif selon la revendication 6, **caractérisé en ce que** ce dispositif de centrage (112) est réalisé sous forme d'une nervure qui est fixée sur cette plaque (120).

8. Dispositif selon la revendication 7, **caractérisé en ce que**, sur la plaque (120) est agencée une seconde nervure (111), de façon concentrique à cette nervure de centrage (112), au moyen de laquelle cette bride supérieure (54) du noyau de bobinage est supportée.

9. Dispositif selon l'une des revendications 6 à 8, **caractérisé en ce que** ledit dispositif de levage est relié à la plaque (120) du dispositif supérieur de réception de noyau.

10. Noyau de bobinage pour réaliser un paquet non emballé et capable d'être transporté, et en particulier destiné à être employé dans le procédé selon la revendication 1, ou avec le dispositif selon la revendication 6, dans lequel le noyau de bobinage prévu pour recevoir un matériau de bobinage allongé à bobiner, et en particulier un matériau à bobiner qui contient du métal, tel que des fils, des torons, des torons enrobés de matière plastique, etc., comprenant:
une âme de bobinage conique creuse, sensiblement à symétrie de révolution, qui présente une première extrémité de petit diamètre et une seconde extrémité de grand diamètre, la cavité (2e) de l'âme (2) étant réalisée de sous forme conique, et l'angle de conicité (18) de l'enveloppe extérieure (2c) et l'angle de conicité (19) de l'enveloppe intérieure (2d) sont sensiblement coïncidents, et la cavité (2e) est ouverte par rapport à la seconde extrémité de grand diamètre;
une bride agencée à la seconde extrémité de l'âme de bobinage de grand diamètre;
**caractérisé en ce que**
le noyau de bobinage comporte une première et une seconde bride, ladite première bride (3) étant fixée de façon détachable sur la première extrémité de l'âme de bobinage (2a) de petit diamètre (2a), et
des moyens de liaison (9, 10, 23) sont prévus pour relier ladite première bride (3) et l'âme de bobinage (2), et ils sont conçus de manière que la bride peut se détacher pendant l'enroulement, mais ne peut pas se détacher de l'âme de bobinage pendant le transport,
de sorte que lesdits moyens de liaison comportent des saillies d'enclenchement (64) écartées les unes des autres et faisant saillie radialement vers l'intérieur, lesquelles coopèrent, dans l'état monté, avec des saillies d'arrêt (79) conçues de façon correspondante et s'étendant également en direction radiale, dans la bride amovible (53), de sorte que la bride amovible et l'âme de bobinage sont tenus l'un par rapport à l'autre en direction axiale, c'est-à-dire dans la direction longitudinale de l'axe de rotation (56) du noyau de bobinage (50),
au moins un élément de verrouillage (86) est prévu consistant d'un matériau élastique comme plastique ou métal, qui présente une plaque allongée s'étendant à une direction radiale, qui est guidée par d'eux portants latéraux (88 ; 89) dans la bride et qui assure la jonction entre la bride détachable et l'âme de bobinage,
les saillies d'arrêt (79) présentent dans la direction périphérique.de la bride (53) une distance qui est supérieure à la longueur de ces saillies d'enclenchement (64), et **en ce que** des saillies d'arrêt (79) et des saillies d'enclenchement (64) sont amenées en engagement mutuel de telle manière que l'âme de bobinage (52) avec les saillies d'enclenchement est d'abord mise en place entre ces saillies d'arrêt, et **en ce que** la bride et l'âme de bobinage sont alors tournées l'une par rapport à l'autre d'un angle prédéterminé, de sorte que ces saillies d'arrêt et ces saillies d'enclenchement viennent en engagement mutuel et
ledit au moins un élément de verrouillage (86) s'engage dans l'intervalle entre lesdites saillies d'arrêt (79), ferme cet intervalle et par cela bloque un mouvement relatif de l'âme de bobinage (52) et de la bride amovible (53).

11. Noyau de bobinage selon la revendication 10, **caractérisé en ce que** l'âme de bobinage (2; 52) est réalisée en matière plastique.

12. Noyau de bobinage selon l'une ou l'autre des revendications 10 ou 11, **caractérisé en ce que** la bride amovible (3 ; 53) est réalisée en matière plastique.

13. Noyau de bobinage selon l'une au moins des revendications précédentes, **caractérisé en ce que** la bobine comporte une seconde bride (4; 54) qui présente un diamètre important à l'extrémité de l'âme de bobinage, ladite bride étant fermement reliée à l'âme de bobinage (2), et étant de préférence réalisée d'une seule pièce avec l'âme de bobinage (2).

14. Noyau de bobinage selon la revendication 10, **caractérisé en ce que** ledit élément de verrouillage (86) est réalisé sous forme d'un élément déformable de façon élastique, lequel est retenu dans la bride amovible, et est déformable de façon élastique lors de l'assemblage de l'âme de bobinage (52) et de la bride (53) ou depuis l'extérieur au moyen d'un outil, de telle manière qu'il libère dans l'état déformé l'intervalle entre ces saillies d'arrêt, de sorte qu'un mouvement de rotation entre 1 âme de bobinage et ladite bride amovible est possible, et **en ce qu'**il retourne après cette déformation jusque dans sa position de départ, dans laquelle on empêche un mouvement de rotation entre l'âme de bobinage et la bride amovible.

15. Noyau de bobinage selon l'une ou l'autre des revendications 10 et 14, **caractérisé en ce que** l'élément de verrouillage comporte un épaississement (93), lequel est conçu de telle manière que l'élément de verrouillage ne parvient pas dans une position dans laquelle la rotation de l'âme de bobinage est libérée, lorsque le noyau de bobinage (50) avec la bride amovible (53) dépassent sur une surface plane, ou sur une surface de réalisation correspondante.

16. Noyau de bobinage selon l'une au moins des revendications 10 à 15, **caractérisé en ce que** la bride amovible (3 ; 53) comporte une surface de bride sensiblement en forme de disque circulaire, et **en ce que** des nervures de renfort s'étendant en direction périphérique et en direction radiale sont prévues sur le côté détourné de l'âme de bobinage dans cette partie en forme de disque.

17. Noyau de bobinage selon l'une au moins des revendications 10 à 16, **caractérisé en ce que** des nervures de renfort s'étendant en direction périphérique et en direction radiale sont prévues sur la bride fixe (4; 54).

18. Noyau de bobinage selon les revendications 16 et 17, **caractérisé en ce que** les nervures de renfort de la bride amovible (3; 53) et de la bride supérieure (4; 54) sont conçues de telle manière que, lorsqu'on empile les uns sur les autres plusieurs noyaux montés et éventuellement remplis, les nervures de renfort de la bride supérieure et de la bride inférieure s'engagent de telle manière les unes dans les autres qu'on réalise une liaison à coopération de formes qui empêche un glissement des brides l'une par rapport à l'autre.
